(19) Europäisches Patentamt
European Patent Office
Office européen des brevets

(11) **EP 3 410 460 B1**

(12) **EUROPEAN PATENT SPECIFICATION**

(45) Date of publication and mention
of the grant of the patent:
**02.09.2020 Bulletin 2020/36**

(21) Application number: **18182986.2**

(22) Date of filing: **26.07.2007**

(51) Int Cl.:
*H01J 3/14* (2006.01)　　　*G02B 5/04* (2006.01)
*G02B 26/08* (2006.01)　　　*G02B 17/00* (2006.01)
*F03G 7/00* (2006.01)　　　*G01J 1/56* (2006.01)
*F03G 6/06* (2006.01)

(54) **METHOD AND APPARATUS FOR COMMUNICATING RADIATION PRESSURE PROVIDED BY A LIGHT WAVE**

VERFAHREN UND VORRICHTUNG ZUR WEITERLEITUNG EINES VON EINER LICHTWELLE ERZEUGTEN STRAHLUNGSDRUCKS

PROCÉDÉ ET APPAREIL POUR COMMUNIQUER UNE PRESSION DE RAYONNEMENT FOURNIE PAR UNE ONDE LUMINEUSE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.07.2006 US 83333606 P**

(43) Date of publication of application:
**05.12.2018 Bulletin 2018/49**

(62) Document number(s) of the earlier application(s) in accordance with Art. 76 EPC:
**13160699.8 / 2 642 504**
**07836281.1 / 2 070 101**

(73) Proprietor: **Spacedesign Corporation**
**Houston, TX 77251-1045 (US)**

(72) Inventor: **CLAY, Joseph M.**
**Houston, TX 77019 (US)**

(74) Representative: **J A Kemp LLP**
**14 South Square**
**Gray's Inn**
**London WC1R 5JJ (GB)**

(56) References cited:
**EP-A2- 0 225 123**　　　**WO-A1-02/103415**
**US-A1- 2004 003 584**　　　**US-A1- 2004 256 539**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## BACKGROUND OF THE INVENTION

The present invention relates generally to a method and apparatus for harnessing the energy present in an electromagnetic light wave. In particular, the present invention relates to the utilization of radiation pressure in the light wave. The invention also relates to a method and apparatus for communicating or otherwise manipulating the light wave and/or communicating radiation pressure provided by the light wave.

US 2004/256539 discloses a method of producing a power output from a light beam, the method comprising: providing a primary prism having a light beam inlet, the primary prism comprising polished crystalline quartz having a given index of refraction, the primary prism comprising multiple total internal reflecting surfaces including a primary face; producing a processed light beam by directing an initial light beam along the initial light path and into a given facet of a light expander/contractor device communicating with the primary prism, the light expander/contractor device expanding light beams that enter the light expander/contractor device from a given direction, producing an exiting light beam; reflecting the exiting light beam from a total internal reflecting surface of the primary prism to a next total internal reflecting surface of the primary prism until the exiting light beam reenters the light expander/contractor device from the same direction as the initial light beam but at a different facet, thereby repeatedly rotating the exiting light beam within the primary prism and producing the processed light beam; selectively operating an optic switch configured to control communication of the processed light beam between the primary prism and a containment chamber, the containment chamber comprising a predetermined reflective light path, and the optic switch comprising a linear switch; containing and repeatedly propagating the processed light beam along the predetermined light path in the containment chamber producing a propagated processed light beam, the predetermined light path comprising one or more moving reflective elements; communicating the power output of the propagated processed light beam to an energy system communicating with the one or more moving reflective prisms, wherein the processed light beams repeatedly impact the one or more moving reflective prisms.

## BRIEF SUMMARY OF THE INVENTION

One aspect of the present invention provides a method of producing a power output from a light beam, the method comprising: providing a primary prism having a light beam inlet, the primary prism comprising polished crystalline quartz having a given index of refraction, the primary prism comprising multiple total internal reflecting surfaces including a primary face; producing a processed light beam by directing an initial light beam along the initial light path and into a given facet of a light expander/contractor device communicating with the primary prism, the light expander/contractor device expanding light beams that enter the light expander/contractor device from a given direction, producing an exiting light beam; reflecting the exiting light beam from a total internal reflecting surface of the primary prism to a next total internal reflecting surface of the primary prism until the exiting light beam reenters the light expander/contractor device from the same direction as the initial light beam but at a different facet, thereby repeatedly rotating the exiting light beam within the primary prism and producing the processed light beam; selectively operating an optic switch configured to control communication of the processed light beam between the primary prism and a containment chamber, the containment chamber comprising a predetermined reflective light path, and the optic switch comprising a linear switch; containing and repeatedly propagating the processed light beam along the predetermined light path in the containment chamber producing a propagated processed light beam, the predetermined light path comprising one or more moving reflective elements and the flat surface of the linear switch; communicating the power output of the propagated processed light beam to an energy system communicating with the one or more moving reflective prisms, wherein the processed light beams repeatedly impact the one or more moving reflective prisms, characterized in that the moving reflective elements comprise prisms comprising a near total reflective surface (NTRS), the predetermined light path passing through an initial transparent surface defined by at least a portion of a transparent front surface of the NTRS, to a first reflective surface extending at a first angle relative to the initial transparent surface, to communicate at a second angle with one or more second reflective surfaces extending at a third angle relative to the initial transparent surface, the one or more NTRS being adapted to totally internally reflect the light beam, and the linear switch comprises a flat surface and a series of linear prisms, the linear switch being adapted to provide control of the compression boundary between the primary face and the flat surface.

These and other features and advantages of the present invention will be apparent to those skilled in the art from the following Detailed Description of preferred embodiments, and the drawings which:

## BRIEF DESCRIPTION OF THE DRAWINGS

FIGS. 1A and 1B are simplified schematics and illustration of an apparatus, such as a photon engine, for utilizing radiation pressure associated with light waves;

FIG. 2 is a simplified schematic of a piston assembly suitable for use with the apparatus in FIG. 1;

FIG. 3 is a simplified schematic of an alternative photon engine;

FIGS. 4a and 4b are illustrations of prisms that may be used in conjunction with a photon engine;

FIG 5 is a simplified schematic of yet another apparatus; and

FIG. 6a is a simplified plan view schematic illustrating an alternative apparatus and a method of operating the apparatus;

FIG. 6b is a side elevation view of the apparatus in FIG. 6a;

FIGS. 7A-7H are simplified illustrations of operation and structure of various components and/or stages of the engine;

FIG. 8 is a simplified illustration of major stages/components of an engine and engine operation;

FIG. 9 is a simplified diagram of light multiplier;

FIG. 10 is an illustration of an intensified beam generated by a light multiplier;

FIG. 11 is an illustration of various modes or stages of a light switch;

FIGS. 12 are graphs illustrating performance of a light switch;

FIG. 13A is a plan view of movable prism according to an alternative embodiment;

FIG. 13B is cross-sectional view across FIG. 13A;

FIG. 14A is a diagram of the movable prism illustrating interaction between the surfaces of the prism and a light beam;

FIG. 14B is an illustration of a participating media through which a representative energy packet travels;

FIG. 15 is an illustration of exemplary temporal ray tracing continuum diagram;

FIG. 16 is an illustration of exemplary temporal ray tracing flat land diagram;

FIG. 17 is an illustration of exemplary control volume representation of a participating media region;

FIG. 18A is an illustration of an exemplary photon engine and ray paths therefor;

FIG. 19 is an illustration of an alternative exemplary photon engine and ray paths therefor; and

FIGS. 20A-C are simplified illustrations of an alternative light switch for the engine of FIG. 19.

## DETAILED DESCRIPTION OF THE INVENTION

The present application is related to U.S. Application Serial No.: 10/836,774 and International Application No.: PCT/US2004/008495. A substantial portion of these disclosures is provided herein, in the Detailed Description, to serve as background and context for the various aspects of the present invention.

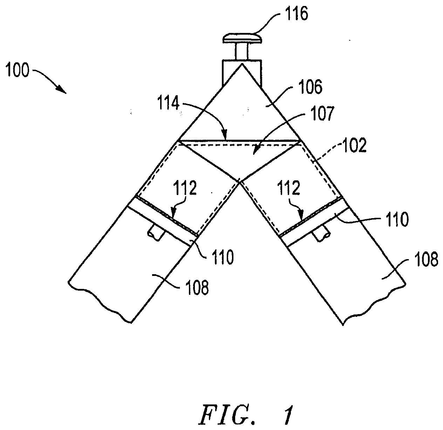

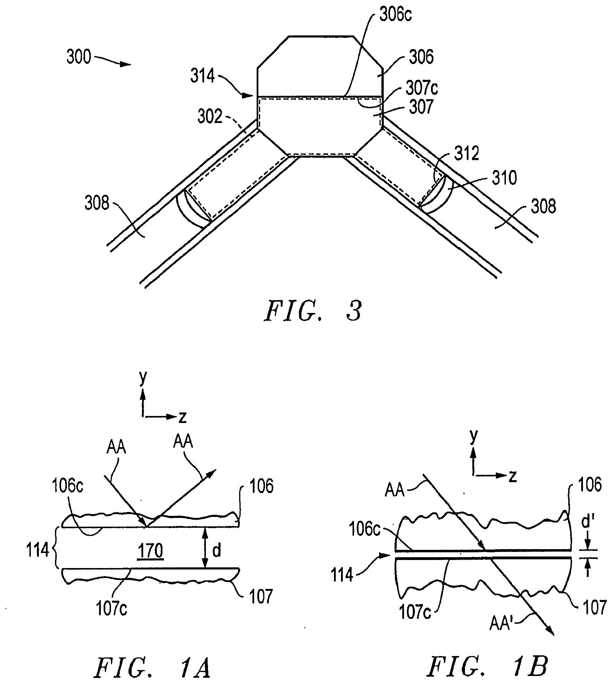

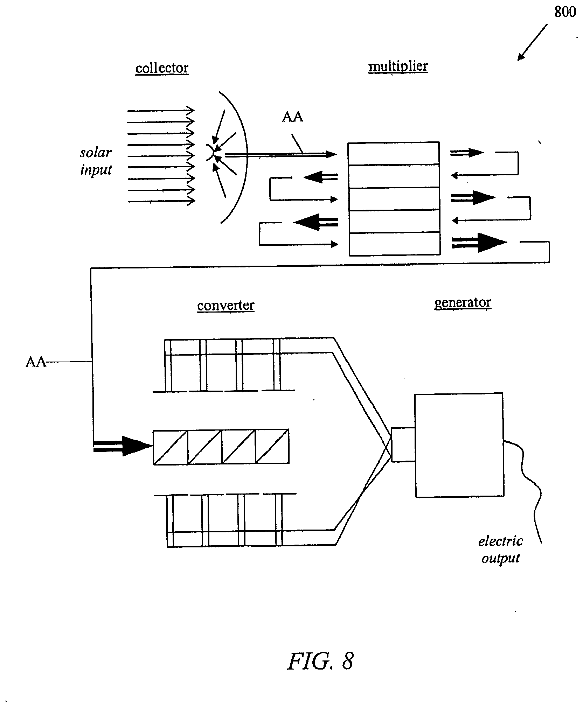

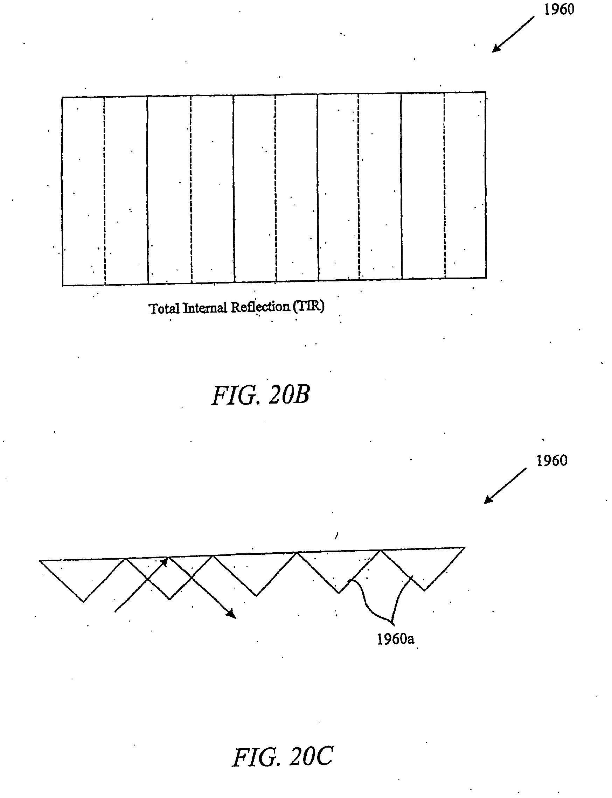

FIGS. 1-7 are provided to illustrate an apparatus and/or method prior to the present invention. FIGS. 8- 20 are introduced to illustrate an apparatus and method according to the present invention. Various aspects of the invention are embodied in these additional Figures.

The present invention relates generally to the utilization of radiation pressure inherent or obtainable from a light wave. The source of this radiation pressure is provided by a light source, or more specifically, propagating electromagnetic waves directed from a light source into or within the apparatus of the invention. The present invention also relates generally to methods and apparatus for communicating or otherwise manipulating such light waves. Operation of a photon engine of the invention entail employment of this aspect of the invention. Generally, the electromagnetic waves are directed into a containment chamber through at least one operable prism that functions in a switching mode. In a preferred embodiment, a primary prism and a secondary prism are used, and are operated together to provide a light switch injection valve, which either reflects light entering the first prism or passes light into the containment chamber.

Operation of the light switch (discussed below in respect to FIGS. 1-7) is based on an optical phenomenon wherein two individual media (*i.e.*, prisms) may be compressed along an interface so that the media combined act as one. First, light is introduced into the primary prism at a predetermined angle. With the light switch in the closed or non-operative mode, the light reflects off a back face or wall of the primary prism. To open the switch and place it in the operative mode, the primary and secondary prisms, *i.e.,* the first and second individual media, are compressed against each other (or more particularly, the secondary prism compresses against or toward the primary prism) through operation of an external driving device. In doing so, the boundary between the two prisms, *i.e.,* the common face, is removed, and the two media function as one. Typically, this boundary may be formed or provided by an air gap or vacuum (in the closed mode) having an index of refraction different from the prism material. Light directed into a first prism, therefore, passes through the boundary with the second prism, through the second prism and enters a containment chamber. It is further advantageous to direct light into the primary prism at a predetermined angle so that the light enters and then propagates within the containment chamber at an angle that is normal to a reflective mirror movably mounted within the chamber.

With light contained in the containment chamber, the light switch is closed. Thus, the light wave or light in the containment chamber maintains columniation and continuously propagates therein. More precisely, the contained light reflects off a first reflective mirror at a normal angle, then against a face of the secondary prism at a nearly 45° angle or other predetermined angle, and then reflects off a second mirror also at a normal angle. These three reflections make up one full cycle which is repeated within a known, predetermined time frame. The time frame also preferably corresponds to 1/2 of the operating frequency of the light switch: between opened and closed modes. During each cycle, the light cycles between the three reflective surfaces at a high rate so that radiation pressure is transmitted to or through the two mirror surfaces thereby converting or translating the energy of the light wave to mechanical work, i.e., movement of the mirror. In preferred embodiments, the mirror is operatively connected to a piston and contained in a cylinder assembly the cylinder preferably does not absorb the light) so as to operate as an engine.

To facilitate description of the invention, a brief explanation of certain concepts is first provided.

The light wave which is the object of the inventive method is an electromagnetic wave. Electromagnetic waves transport linear momentum making it possible to exert a mechanical pressure on a surface by shining a light on it the surface. It should be understood that this pressure is small for individual light photons. But given a sufficient number of photons a significant mechanical pressure may be obtained.

Maxwell (J.C.) showed the resulting momentum p for a parallel beam of light that is totally absorbed is the energy U divided by the speed of light c.

$$(1) \quad p = \frac{U}{c}$$

If the light beam is totally reflected the momentum resulting at a normal incidence to the reflection is twice the total absorbed value.

$$(2) \quad p = \frac{2U}{c}$$

These examples represent the two ends of the spectrum for momentum transfer. At one end the totally absorbed beam demonstrates the totally inelastic case where the particles stick together and the most kinetic energy is lost, typically, to another form of energy such as thermal energy or deformation. At the other end of the spectrum, a totally reflected beam demonstrates a completely elastic collision where kinetic energy is conserved.

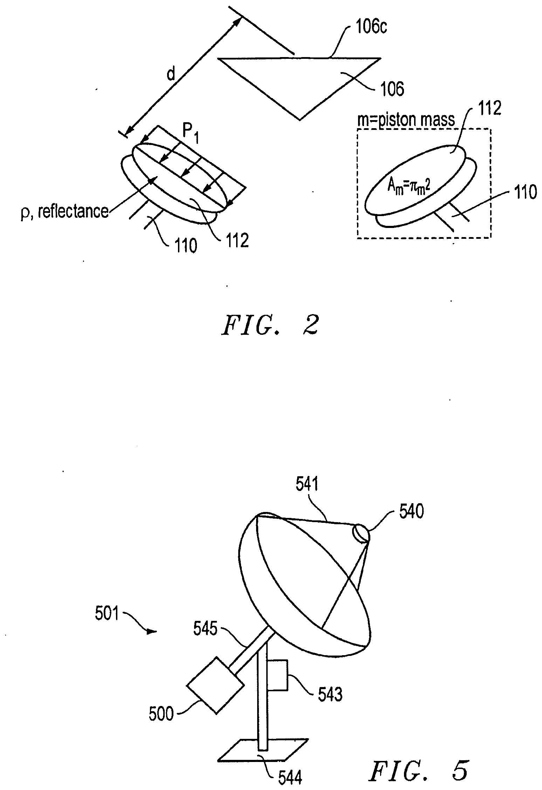

With reference to FIG. 2, the following sections provide calculations on the power produced by an apparatus and method, i.e. an engine, according to the invention. The calculations can be divided into four sections: Force (F); Time (T); Work (W); and Power (P).

Maxwell [2] showed the resulting momentum p is twice the energy, U, divided by the speed of light, c, for a parallel beam of light totally reflected at an angle normal to the incidence.

$$(3) \quad p = \frac{2U}{c}$$

This pressure can be multiplied by compressing the beam from its initial length, $l_i$, to the compressed length, $l_c$. The multiplied beam has an initial radiation pressure, $po$, that enters the photon engine containment chamber at time 0 (zero), that is found by the equation.

$$(4) \quad p_0 = \frac{l_i p}{l_c}$$

The change in the radiation pressure can be described by the reflectivity (including absorption from participating media), red-shift caused by the movable reflective surface, and the transmission through the light switch.

$$(5) \quad p_1 = \rho_m \tau_s p_0 \frac{c - v_1}{c}$$

Generalizing the above equations for arbitrary time n the radiation pressure, $p_n$, for bounce n is found by the equation.

$$(6) \qquad p_n = \rho_m{}^n \tau_s{}^n p_0 \left( \left( \frac{c - v_{n-1}}{c} \right)! \right)$$

The time the beam is incident on the mirror is a function of the red-shift. After each red-shift the beam length increases which increases the incident time.

$$(7) \qquad l_1 = l_0 + v_0 t_0 \Rightarrow t_1 = t_0 \frac{c}{c - v_0}$$

Generalizing the above equation for arbitrary time n the incident time is shown by the equation.

$$(8) \qquad t_n = t_0 \left( \left( \frac{c}{c - v_{n-1}} \right)! \right)$$

The velocity increase, $\Delta v_n$, of the piston head at arbitrary time $n$ is calculated by the equation.

$$(9) \qquad \Delta v_n = \frac{\rho_n \tau_n p_{n-1} A_m}{m} t_{n-1}$$

The velocity, $v_z$, at time $z$ is calculated by summing v over the time 0 to z.

$$(10) \qquad v_z = \sum_{n=1}^{z} \Delta v_n + v_0 = \sum_{n=1}^{z} \frac{\rho_m \tau_s p_{n-1} A_m}{m} t_{n-1} + v_0$$

$$(11) \qquad v_z = \frac{\rho_m \tau_s A_m}{m} \sum_{n=1}^{z} p_{n-1} t_{n-1} + v_0$$

$$(12) \qquad v_z = \frac{\rho_m \tau_s A_m}{m} \sum_{n=1}^{z} \rho_m{}^n \tau_s{}^n p_0 \left( \left( \frac{c - v_{n-1}}{c} \right)! \right) t_0 \left( \left( \frac{c}{c - v_{n-1}} \right)! \right) + v_0$$

$$(13) \qquad v_z = \frac{\rho_m \tau_s A_m}{m} p_0 t_0 \sum_{n=1}^{z} \rho_m{}^n \tau_s{}^n + v_0$$

The work, W, generated by the photon engine is calculated by the equation.

$$(14) \qquad W = \frac{1}{2} m \left( v_z{}^2 - v_0{}^2 \right)$$

$$(15) \qquad W = \frac{1}{2} m \left( \left( \frac{\rho A_m}{m} p_0 t_0 \sum_{n=1}^{z} \rho_m{}^n \tau_s{}^n + v_0 \right)^2 - v_0{}^2 \right)$$

The summation can be re-written using a power series solution. The result is the short form of the governing work equation.

$$(16) \qquad W = \frac{1}{2} m \left( \left( \frac{p_0 A_m t_0}{m} \left( \frac{1 - (\rho_m \tau_s)^z}{1 - \rho_m \tau_s} \right) + v_0 \right)^2 - v_0{}^2 \right)$$

Now turning to FIGS. 1- 7, these Figures illustrate several embodiments of an apparatus according to the invention. Specifically, each of Figs. 1, 3, 5, and 7 depict an exemplary photon engine according to the invention and various devices for use therewith, also according to the invention. These Figures also depict devices for communicating or otherwise manipulating light waves, according to the invention. One of these inventive devices is a compression boundary light switch. Another of these devices is a primary prism capable of multiplying or splitting a light wave introduced therein *(i.e.,* prior to introduction into the containment chamber) to increase its intensity.

FIG. 1 is a simplified schematic of a system and/or apparatus 100 that manipulates or otherwise communicates light or light waves and/or utilizes radiation pressure to generate mechanical work, each according to the invention. In particular, the apparatus 100 is a photon engine 100 that utilizes radiation provided by a light wave introduced into or manipulated by the apparatus. The inventive photon engine 100 preferably includes a primary prism 106 for receiving the light wave, a secondary prism 107 operatively and collectively associated with the primary prism 106, and a containment chamber 102 (as shown in dash lines in FIG. 1). The primary prism 106 and the secondary prism 108 are situated so as to abut face-to-face (or wall-to-wall) and to form a compression boundary interface 114. As discussed briefly above, the interface 114 may actually include, in one mode, a closeable or compressible air or vacuum gap between the two faces, as further discussed in respect to FIGS. 1a and 1b.

The exemplary photon engine 100 further includes substantially identical pairs of piston housings or cylinders 108, piston assembly 110, and reflective mirrors 112. The containment chamber 102 is defined by the front face of the secondary prism 107, the cylinders 108, and the mirrors 112. The highly reflective mirrors 112 are mounted on a planar surface of the moveable piston 110. The mirrors 112 and piston 112 travel together within the cylinders 108. As will also be described below, the piston assembly 110 may be mechanically connected with a crank shaft assembly and the like.

As is apparent from FIG. 1, movement of the reflective mirrors 112 and piston assembly 110 allows for the volume of the containment chamber 102 to increase or decrease, at least on either side of the secondary prism 107. Preferably, the mirrors 112 will move in unison (as part of a larger piston/crank shaft assembly). Moreover, the compression boundary 114 between the primary prism 106 and secondary prism 107 is controlled by a light switch, also according to the invention. As discussed above, the light switch may be operated by way of a piezoelectric drive mechanism 116 that drives the closing of the air gap (through compression) to allow light to pass into the containment chamber 102. Operation of the drive mechanism 116 determines, therefore, the open and close modes of the light switch 114, in a controlled manner.

The photon engine 100 preferably utilizes quartz material for the primary prism 106 and the secondary prism 107. More specifically, the photon engine 100 provides a compression boundary light switch that operates on two fundamental principals or properties of quartz: the piezoelectric effect and total internal reflection (TIR). The piezoelectric effect occurs when quartz is placed in an electric field. Specifically, quartz expands in the presence of an electric field. The crystalline structure of quartz has three primary axis: X, Y, and Z. By placing an electric field oriented along its X-axis, the quartz will expand or contract based on the direction of the electric field. If the electric field results in a compression along the X-axis, then the quartz will expand along or in the Y-axis. By constraining the quartz along the Y-axis during expansion, stress is generated in the quartz along the Y-axis. This generation of stress and the resulting strain in the Y-axis by an electric field oriented along the X-axis is utilized to compress the two pieces of quartz *(i.e.,* primary prism 106 and secondary prism 107.

FIG. 1a depicts a detailed schematic of the compression boundary interface 114 while in the closed or non-operative mode. In this mode, the back face 106c of the primary prism 106 is spaced from the front face 107c of the secondary prism 107. Given Snell's Law and the incident angle, the index of refraction of both prisms are sufficiently similar (e.g., preferably within about 5% to about 20% of each other) to facilitate operation of the light switch in the open mode. Also, the indices of refraction for both prisms are sufficiently dissimilar from the void (or air space) to facilitate operation of the light switch in the closed mode. As a result, an air gap 170 is provided between the two faces 106c, 107c. In the present description, the compression boundary or interface 114 is used to refer to the air gap 170 and the faces 106c, 107c. FIG. 1A also shows the coordinates or axes X, Y of the quartz or primary prism 106. Typically, the air gap 170 will have a depth of about 2000 nanometers to 50 nanometers, and more preferably, between about 1000 nanometers to 100 nanometers, in the closed or non-operative mode.

FIG. 1b illustrates the compression of the compression boundary 114 upon operation of the piezoelectric drive mechanism 116. The result is that the air gap 170 is compressed to about 100 nanometers to 0 nanometer, upon application or excitation of the electric field. As discussed above, application of the electric field results in contraction along in the X-axis direction, which generates stress in the Y direction (as a result of the quartz material or face 106c being prevented from expanding in the Y direction). Preferably, application of the drive mechanism 116 will be applied to both the primary prism 106 and secondary prism 107, or more specifically, the faces 106c and 107. Preferably, the air gap 170 will be compressed to a depth of about 100 nanometers to about 0 nanometer, and more preferably to a depth of about 50 nanometers to about 0 nanometer.

FIGS. 1a and 1b are also used to indicate the communication of the light wave AA through the primary prism 106 and/or compression boundary 170, according to the invention. In FIG. 1a, the light wave AA impacts the back face 106c at an incident angle of about 45°. Due to the index of refraction provided also by the air gap 170, the light wave AA reflects due to TIR in a direction that is generally 90° to its incident angle. In FIG. 1b, because the air gap 170 is substantially eliminated, and the quartz material of the secondary prism 107 is substantially similar to that of the primary prism 106, the two faces 106c, 107c, function as one single medium. That is, the effect of a different index of refraction (provided by the air gap 170) is eliminated. Accordingly, the light wave AA passes through the face 106c and through the face 107c of the secondary prism 107 without interruption.

Snell's Law describes the effect when radiation, or electric magnetic waves, pass from one media to the other. The resulting angle is a function of the incident angle in the index of refraction for both media. If the result of Snell's Law is an imaginary number, the electromagnetic wave is TIR. The photon engine 100 according to the invention utilizes this phenomenon to contain light waves within the primary prism (as is described in respect to a further embodiment).

By coupling TIR and removal of the TIR boundary through piezoelectric compression, a light switch according to the invention is produced. In the off-mode, with no voltage applied, the light is TIR and remains outside the containment chamber 112. When the voltage is applied, the light switch is said to be in the on-mode and the TIR boundary is removed. This allows the light wave to pass through the compression boundary or interface CC, and into the containment chamber 112. Accordingly, an important step of the inventive method, the light switch is actuated on and than off quickly, so as to capture or contain light.

Preferably, the drive mechanism 116 includes a source of high voltage, low current (near electrostatic) that sends the signal to the piezoelectric quartz or prism 106, 107. Mechanical connections is provided by copper plates, for example, attached to the appropriate faces of the primary and secondary prisms 106, 107. The drive mechanism further includes a field effect transistor for providing switching at a very quick (gigahertz) pulse. Most preferably, the pulse is open for a nanosecond and then off for a millisecond.

FIG. 2 is a schematic of one embodiment of the moveable assembly comprising piston 210 and mirror 212. The assembly is characterized by a mass m (and a particular area) and reflectivity E. In operation, the mirror surface is irradiated by a light flux pi over a distance d by radiation transmitted through a compression boundary 214 and into secondary prism 207. The radiation pressure p collectively generates a mechanical force that acts on the mirror 212 and piston assembly 210.

Now turning to FIG. 3, there is illustrated an alternative embodiment of a photon engine 300 according to the invention. In the depicted variation, wherein like reference numerals are used to refer to like elements, a primary prism 306 is situated adjacent a secondary prism 307. In particular, a back face 306c of primary prism 306 is spaced from a front face 307c of secondary prism 307, to form a compression boundary interface 314 between the primary prism 306 and the containment chamber 302. The boundary interface 314 provides for an octagonal cross section switch element in this embodiment. In all other aspects of the design and operation, the photon engine 300 is substantially similar to that depicted in FIG. 1. As with the photon engine 100 of FIG. 1, the photon engine 300 includes a pair of cylinders 308, a piston 310 moveably accommodated therein, and a highly reflective mirror 312 mounted on the piston 310.

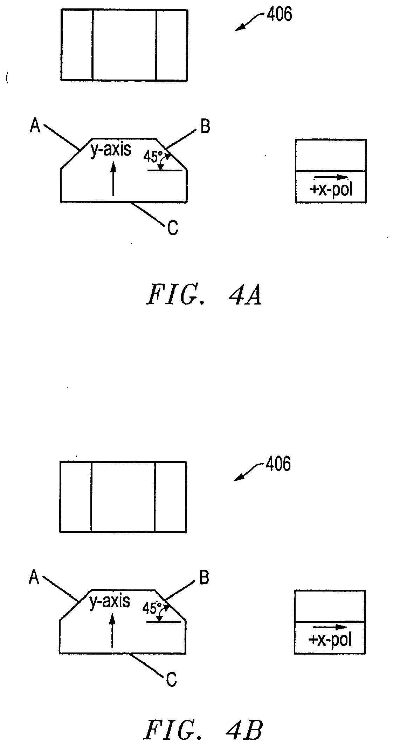

FIGS. 4a and 4b illustrate prisms 406 of various geometric configurations suitable for use as a primary prism in the present invention. The prisms 406 are preferably made of crystalline quartz material with an index of refraction that is greater than 1.45. In practice, it is important to provide for highly polished surfaces through or from which light waves will refract, pass, or reflect. In the prisms 406 of FIG. 4, faces A, B, and C are polished for this purpose.

FIG. 5 depicts a simplified schematic of a system 501 for converting radiant energy into a different form of energy or work, according to the invention. The system 501 utilizes a photon engine 500 as described previously. Furthermore, the system 501 utilizes a primary collective mirror 541 having an inner parabolic surface that may be covered or coated with a 3M™ radiant light film. The system 501 may further include or utilize at least a secondary collector mirror 540 mounted above the primary collector 541 and positioned to reflect light waves reflecting from the inner parabolic surface of the primary collector 541. The secondary collector 540 is characterized by a smaller surface, but may advantageously be covered or coated with 3M™ radiant light film on an outer surface. The system may be further equipped with a light guide 545 for communicating concentrated light from the secondary collector mirror 540 and the primary collector mirror 541 to the photon engine 500. Preferably, the system 501 will include a stand and base assembly 544, and a pointing controller 543 for directing the system 501 towards a radiation source.

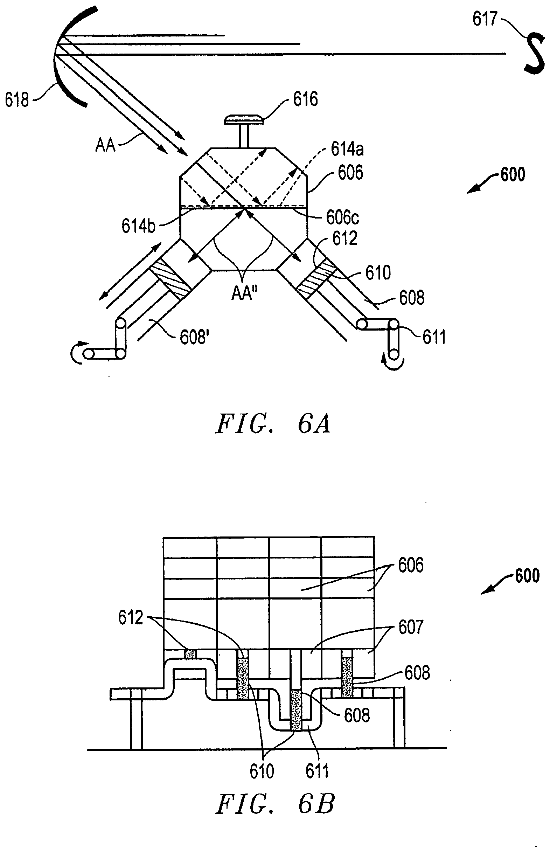

FIGS. 6a and 6b are simplified schematics further illustrating a variation of the inventive photon engine, in particular, a multi-cylinder photon engine 600. These two figures are also illustrative of the operation of the inventive engine 600. FIG. 6a provides a front view of the engine 600, including two cylinders 608, 608' which reciprocate in unison. In the side elevation view of FIG. 6b, the four cylinders 608 on one side of the photon engine 600 are shown.

The cylinders 608 accommodate travel of a piston assembly 610 that is operatively connected to crank shaft assembly 611.

Turning to FIG. 6a, the photon engine 600 includes an octagonal shape primary prism 606 positioned adjacent a similarly shaped secondary prism 607, via compression boundary interface 614 formed at least partially by back and front faces 606c, 607c, respectively. The secondary prism 607 communicates with each of cylinders 608, 608' and thus the mirror 612 and piston 610 in each of the cylinders 608, 608'. In the side elevation view of FIG. 6b, four primary prisms 606 and four secondary prisms 607 are shown, each pair being operatively associated with a pair or a bank of cylinders 608 and the piston 610 and crank assemblies 611 situated therein.

Turning to FIG. 6a, the compression boundary interface 614 is operatively driven by a prism piezoelectric drive mechanism 616 to operate the opening or closing of compression boundary light switch (CBLS), as described previously. In FIG. 6a, the interface denoted by 614a is used to show the light switch in the closed position (in dash lines) while reference numeral 614b is used to denote the light switch in the closed position. FIG. 6a further illustrates the source of light waves 617 provided externally of the photon engine 600. The light waves 617 are first captured or concentrated via collector mirror 618 and redirected as instant radiation into the primary prism 606 (see arrows AA). The light waves AA impact the back face 606c at an incident angle of about 45°. If the light switch is in the closed position (denoted by dash line and ref. no. 614a), the light waves AA reflect off the interface 614a (see dash lines) and are redirected through another face of the prism 606 (and exits the primary prism 606).

When the interface 614 is in the open position (denoted by solid line and ref. no. 614b), the light waves AA travels through the interface 614b and enter the containment chamber 602 and impact the back face 606, as shown by arrows AA'. Further, the prisms 606 and 608 are configured such that the light waves AA' enter the containment chamber 608 and are directed straight into the cylinder 608. Thus, the light wave AA' contacts the mirror surface 612 at a preferably generally normal angle and as a result, a relatively high degree of reflectance is achieved. As illustrated, a reflected light wave reflects generally straight back towards the open interface 614b, which is now in a closed position, and impacts the interface at about a 45° angle. Accordingly, the reflected light wave AA' reflects off the closed interface 614b in a direction of the second cylinder 608 of the containment chamber 602. As previously described, the reflected light wave AA' also impacts the second mirror 612 at a generally normal orientation and reflects back at a normal orientation (and at a high degree of reflectance). Accordingly, the light wave AA' reflects along the same path from which it traveled to reach the second mirror 612. In one respect, a predetermined light path is defined by the orientations of the prisms 606, 607, the cylinder 608, 608', among other components. Such a predetermined light path is represented by the bi-directional arrows AA' in FIG. 6.

As also described previously, contact of the light wave AA' on the surface of the mirror 612 generates radiation pressure thereon. This radiation pressure acts to displace the mirror 612 and piston 610 assembly a distance which is denoted by "X" in FIG. 6 (thereby generating work). Moreover, this displacement causes crank shaft assembly 611 to turn thereby generating mechanical energy. In another mode, the drive mechanism 614 may be operated in a frequency modulated mode so that the opening and closing of the light switch allows light to enter the secondary prism 607 on a time scale that is related to the frequency of the radiation inside the secondary prism 607. In this way, the radiation pressure on piston 612 assemblies is reinforced.

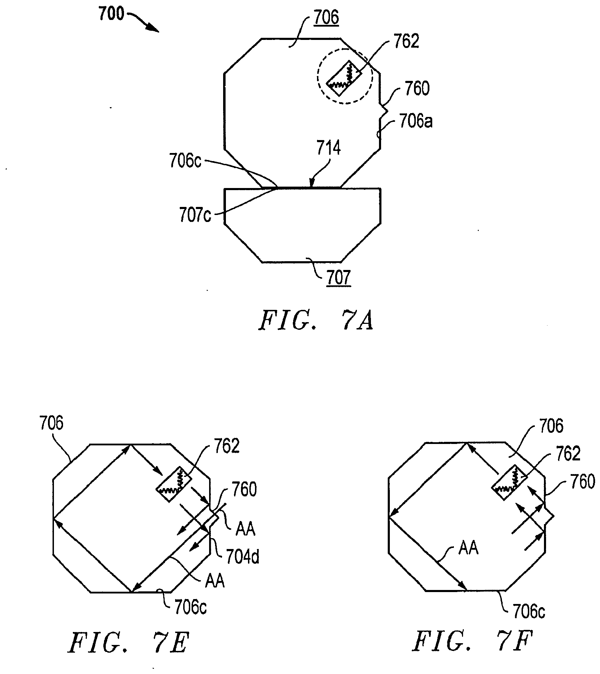

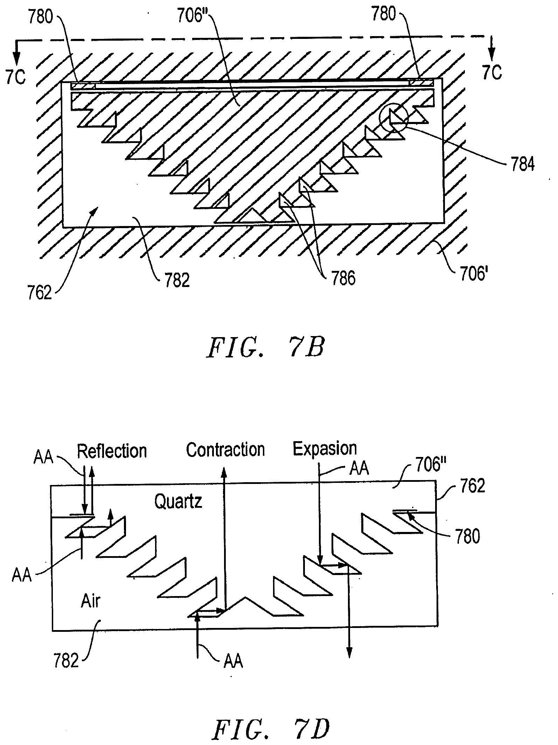

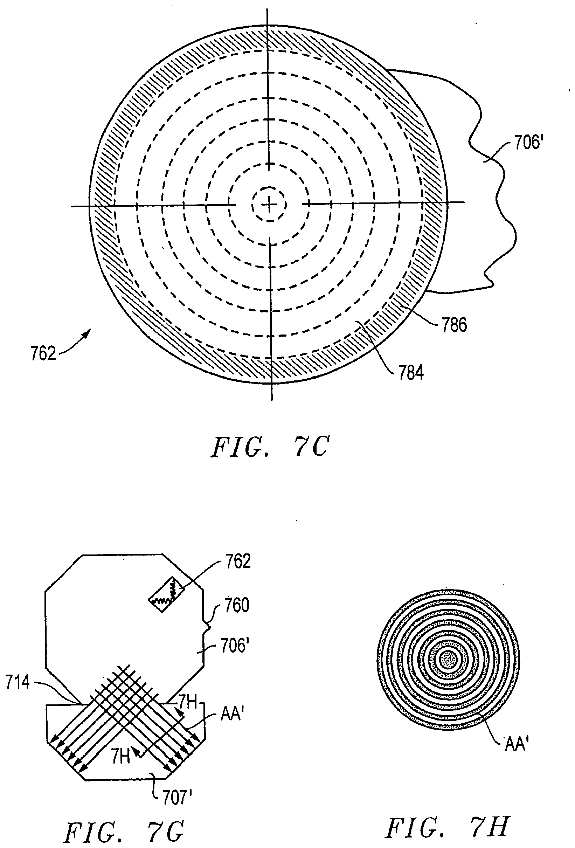

The simplified schematics of FIG. 7 illustrates yet another alternative embodiment of the photon engine according to the invention, wherein like reference numerals are used to indicate like elements. In particular, FIG. 7a depicts an arrangement of a primary prism 706 and a secondary prism 707 that utilizes a light beam expander/contractor 762 embedded in the primary prism 706. Specifically, the light beam expander/contractor 770 functions to split the light beam multiple times and redirect it upon itself, thereby increasing the intensity of the light wave ultimately introduced into the containment chamber 702a.

In the embodiment of FIG. 7, the primary prism 706a has an octagonal shape, and thus, has eight faces or walls 708a - 708h (only some of which are shown). As in previous embodiments, the primary prism 706 is preferably made of a quartz material. The primary prism 706 includes a protrusion 760 extending from the first face 708a, that serves as a beam inlet 760. The beam inlet 760 preferably has a concentrated, circular shape. Further, another face 706c of the primary prism 706 is positioned adjacent to and spaced apart from a front face 707c of the secondary prism 708 to form a compression boundary interface 714. As discussed above, the interface 714 provides for a compression boundary light switch upon operation by the proper drive mechanism, in accordance with the present invention.

Referring to the detailed view of FIG. 7b, in yet another aspect of the invention, the primary prism 706 is equipped with a light beam expander/ contractor 762 positioned internally of the primary prism 706 and embedded in the quartz material 706'. FIGS. 7c and 7d provide further detail illustrations of the expander/contractor 762.

Returning to FIG. 7d, the light expander/contractor 762 is a faceted quartz block embedded in the quartz material 706'. Physically, the light expander/contractor 762 is a carved, circular section of quartz material 706' having concentric air interfaces 786 cut therein. The faceted quartz block 762 is centered on an incoming light beam AA having a given diameter. As shown in FIG. 7b, the quartz block 762 (i.e., the light expander/contractor 762) provides a set of concentric 45° facets of quartz-air interfaces. The cross hatch section illustrates the quartz material 706' of the primary prism 706 as well as the quartz material 706" of the quartz block 762. The remaining non-cross hatch areas are air or vacuum interfaces 782, which are void of the quartz material. More importantly, these air interfaces 782 have optic properties (*i.e.,* index of refraction) different from that of the quartz material. FIG. 7b and the plan view of FIG. 7c, also depict a concentric mirror 780 providing the outer cylinder of the concentric interfaces. As will be explained below, the mirror 780 functions to reflect the outer most diameter concentric cylinder of light during operation, thereby reversing the light path and beginning the process of light contraction.

The schematic of FIG. 7d is provided an illustration of how the inventive light expander/contractor 762 communicates or otherwise manipulates a light beam AA traveling through the primary prism 706. In a first mode of communication, the light beam $AA_E$ reflects upon the 45° quartz-air interface 784. Each incident beam experiences two 90° reflections in the outward direction, thereby converting the diameter of the beam to a larger (expansion) diameter. In the reverse mode, the light beam $AA_C$ again hits the quartz-air interface 784 and experiences again two 90° reflections that converts the diameter to a smaller (contraction) diameter.

The light expander/contractor 762 provides, therefore, three operations: light expansion, light reflection, and light contraction. Light reflection ($AA_L$) occurs once the light beam AA has been expanded to the largest concentric cylinder. This is prompted by reflection off of mirror 780, which reverses the direction of the light $AA_L$. Once the light beam has been completely expanded and contracted, the light switch (compression boundary interface 714) is activated, thereby allowing the containment chamber 702 to be filled in two directions, as shown in FIG. 7g. FIG. 7h illustrates the resulting beam pattern acting on the mirror 710 and piston assembly 712, after the beam flux has been multiplied in the primary prism 706. Once all of the light is injected into the containment chamber 702, the light switch is returned to the closed position so that the resulting beam is contained in the containment chamber 702. The multiplication of the light beam flux from the primary prism 706 results, therefore, in a higher power output.

FIGS. 7e and 7f illustrate general operation of the primary prism 706, while the compression boundary light switch is in the closed or off mode. Collected light beam AA is introduced into the primary prism 706 at a generally normal angle through beam inlet 760. Preferably, the beam inlet 760 is located such that the light beam AA introduced into the primary prism 706 is directed towards the back face 706c and compression boundary interface 714. Initially, the light switch is in the closed or reflective stage. Thus, the light beam AA reflects at a generally normal angle and toward another face 706e of the primary prism 706. The incident angle of this reflected light beam AA is such that the light beam AA will also reflect off the prism face 706e (and subsequent face 706g) at a generally normal angle. Accordingly, as illustrated in FIG. 7e, the light beam AA initially rotates around the primary prism 706 due to total internal reflection.

Preferably, the collected beam AA enters the primary prism 706 and experiences three light reflections before entering the beam expander/contractor 762. The direction at which the light beam AA enters the expander/contractor 762 determines whether the beam AA is expanded or contracted. In FIG. 7e, the light beam AA is shown rotating within the primary prism 706 in the clockwise direction. In this direction, the light beam entrance into the beam expander/contractor 762 results in the light beam AA being expanded. Conversely, the light beam AA may be directed within the primary prism in a counter clockwise direction. As illustrated in FIG. 7f, the light beam AA enters the expander/contractor 762 such that the resulting light beam will be contracted. With each rotation and introduction into the beam expander/contractor, the resulting light beam AA expands or contracts to the next level of concentric cylinders. Expansion is, however, limited by the reflected mirror 780 at the largest level of concentric cylinders. At this point, the direction of the light beam AA is reversed thereby reinitiating the process of contraction.

FIGS. 8-20 are provided to illustrate additional inventive features and/or improvements to the apparatus and/or methods of utilizing radiation and/or communicating a light wave and radiation pressure, as previously described. For purposes of illustration and convenience, the Figures and the invention will be described primarily in the context of a photon engine (such as that previously described in respect to FIGS. 1-7). The invention should not, however, be limited to such a specific and exemplary construction and application of various inventive concepts. It is intended, and shall be apparent to one of relevant skill, that these various concepts may be employed in other constructions and with other applications. Such other constructions and other applications are contemplated by the invention.

For example, it is contemplated that various aspects of the invention apparatus and methods may be employed strictly communications operation, including switching, and in optics-related applications. In specific applications, light intensification, electric generation, and/or use of moveable reflective surfaces may not be relevant. For example, these aspects may not be used in a strictly switching and/or control operation. It is noted that such further applications involve, however, the utilization of radiation pressure in a light wave and/or communicating a light wave (or radiation pressure), according to the present invention.

FIG. 8 is a simplified illustration of an engine 800 for converting radiation pressure conveyed by a light beam(s) into mechanical work (the "Photon Engine"), according to a preferred embodiment of the invention. In this preferred embodiment, the photon engine 800 employs a novel thermal control technique that entails red-shifting a light beam to reduce residual heat. This preferred mode further employs a near total reflective surface (NTRS) for the movable mirror and multiple resonating piezoelectric actuators movably associated with the mirror and positioned in series. In this embodiment, the reflective surface(s) and movable mirror are provided in a movable prism. In a preferred mode, the mechanical work is transferred through the NTRSs, to the movable prism and compressible piezoelectric actuators, before conversion to electric output. Operation of the photon engine preferably involves other critical sub-processes, including light beam collection, light beam multiplication, and light beam containment, which, in most part, have been described herein.

The principles behind operation of certain components or processes of the inventive engine may be explained by the following: a governing work equation; Fresnel equations applied to light switching; a simplistic extinction equation to quantify light as it moves through a region of participating media; and Snell's Law to describe total internal reflection. The governing work equation provides a single equation for calculating the work output of a photon engine. The Fresnel equations show light switching using beyond critical angle tunneling of evanescent waves and may be applied in designing the required switching mechanism for containing light. The participating media provides a measure of light absorption within the quartz. Multiple components of the photon engine rely on the transport of energy though quartz. Snell's law describes light refraction and also when the resulting refraction angle becomes imaginary that light is totally internally reflected (TIR).

The mechanical work generated, W, by the engine may be described by the work equation of a piston-mass system [1] that relates momentum transfer, or radiation pressure, between the light beam and a movable mirror surface. The following equation includes an initial velocity of the movable mirrors and shows light beam red-shift is cancelled by light beam lengthening.

$$W = \frac{1}{2} m \left( \left( \frac{p_0 A_m t_0}{m} \left( \frac{1 - (\rho_m \tau_s)^z}{1 - \rho_m \tau_s} \right) + v_0 \right)^2 - v_0^2 \right) \qquad (1)$$

where

$p_0$    is initial radiation pressure,
$A_m$    is area of each mirror,
$t_0$    is time duration of initial beam strike,
m    is mass of mirror/piston assembly,
$\rho_m$    is effective reflectance of mirrors,
$\tau_s$    is effective transmission of light switch,
z    is number of allowed bounces during momentum transfer, and
$v_0$    is initial velocity of the mirrors.

The efficiency of the engine is calculated by dividing the work, shown in (1), by the total energy contained in the initial light beam.

The photon engine 800 may be described as having four major components/phases: light collector/collection 810; light multiplier or intensifier/intensification 820; light converter/conversion 830; and electric generator/generation 840. The simplified diagram of FIG. 8 depicts the four major components and illustrates the exemplary travel of a light wave AA therethrough, along a predetermined path.

The light collector 810 generates, from a large area or distribution of collected light, a smaller, concentrated beam AA. In this light collection phase, the light source is preferably solar input that is captured by a large parabolic collector. The beam is focused to a reverse parabolic mirror, wherein the collected light AA is again collimated into a concentrated beam. This concentrated beam is then directed to the light multiplier 820. The light multiplier 820 manipulates the beam AA to generate a multiplied or intensified beam. During this intensification phase, the collected beam is continuously input from the collector. In another aspect, the light multiplier 820 also allows for synchronization of the light collection phase with the light conversion phase. The result is continuous light processing and engine operation.

FIG. 8 depicts an inlet having an extended tab to the light multiplier 820. The incident beam is purposefully directed normal to the extended tab, thereby avoiding Brewster's angle which would cause reflections [4]. Hence, the machine is designed to have all incident beams strike quartz along the normal surfaces. This also prevents dispersion, or wave length dependent refraction, which may otherwise cause the light to disperse based on wavelength (rainbow effect). Light that is incident along a surface normal will cause specular reflection. Within the containment chamber, this is acceptable because the light is still reflected.

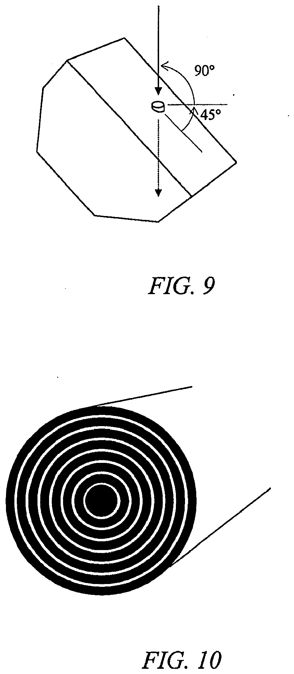

During the light intensification phase, the collected light beam AA is wrapped around itself, so that the beam AA, when viewed edge on, appears as a set of larger concentric circles, as shown in FIG. 10. This process takes a thin beam, with a relative low energy, and increases the beam energy by widening the beam with each concentric circle. The light path AA continues to make revolutions around the inside of the multiplier 820, with each forward revolution striking the expander and expanding to the next higher diameter concentric circle. When the beam reaches the outer concentric circle, the light AA is incident on a mirror surface and reflected in the reverse direction. The light AA then returns in the same path within the light multiplier 820 except in the reverse direction and with opposite rotation. When the light AA is incident on the light contractor, the beam diameter is reduced with each reverse revolution. The light multiplier 820 produces the most powerful beam when the reverse beam winds back around the multiplier to the initial beam diameter (solid circle). At this point, the collected light beam AA has been converted into a multiplied (intensified) light beam AA hitting the light switch in both directions.

The light conversion phase is initiated by actuating the light switch to change from a totally reflective mode (closed) to a totally transparent mode (opened). As a result, the multiplied beam is injected from the light multiplier 820 into the containment chamber 830. When the light multiplier is completely emptied of the target light beam, the light switch is returned to its totally reflective mode (closed).

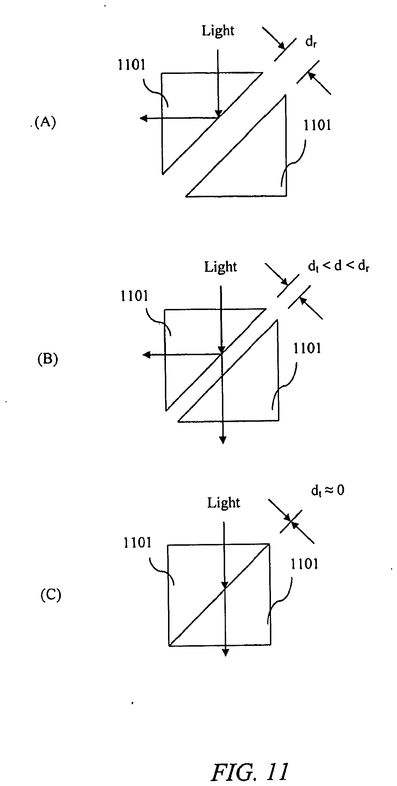

Containing light requires a mechanism to rapidly switch from total reflection to total transmission. One embodiment of this light switch is referred to herein as a compression boundary light switch (CBLS). The switch employs two quartz prisms 1101, as shown in FIG. 11. The quartz prisms 1101 are spaced so that a small distance, $d$, exists between the two prisms 1101. Initially, the distance will be a significantly large, $d_r$, to produce total internal reflection, see FIG. 11A. When the two prisms are brought very close together, so that only a very small distance, $d_t$, exists, the light is totally transmitted, see FIG. 11C. In the interim and while the surfaces are moving together, the light senses the other surface and the light will both be transmitted and reflected, see FIG. 11B. The amount of transmission may be solved as a multiple boundary problem using Fresnel equations [2].

When the space between two quartz prisms 1101 is sufficiently narrow, an evanescent wave stimulates the second surface so that light is transmitted. The amount of transmission is a function of the incident angle, gap index of refraction, quartz prism index of refraction, light wavelength and the polarization of the light.

The total transmission for p-polarization is shown (2).

$$T_p^{tot} = \frac{n_t \cos\theta_t}{n_i \cos\theta_i} \frac{\left|t_p^{i\to m}\right|^2 \left|t_p^{m\to t}\right|^2}{\left|e^{-ik_m d \cos\theta_m} - r_p^{m\to i} r_p^{m\to t} e^{ik_m d \cos\theta_m}\right|^2} \qquad (2)$$

The total transmission for s-polarization is shown (3).

$$T_s^{tot} = \frac{n_t \cos\theta_t}{n_i \cos\theta_i} \frac{\left|t_s^{i\to m}\right|^2 \left|t_s^{m\to t}\right|^2}{\left|e^{-ik_m d \cos\theta_m} - r_s^{m\to i} r_s^{m\to t} e^{ik_m d \cos\theta_m}\right|^2} \qquad (3)$$

Fresnel coefficients $t_p$, $t_s$, $r_p$ and $r_s$ are direct consequences of Maxwell's equations. The coefficients are shown for p-polarization in (4.1-4.4).

$$t_p^{i\to m} = \frac{2\cos\theta_i \sin\theta_m}{\cos\theta_m \sin\theta_m + \cos\theta_i \sin\theta_i} \qquad (4.1)$$

$$t_p^{m\to t} = \frac{2\cos\theta_m \sin\theta_t}{\cos\theta_t \sin\theta_t + \cos\theta_m \sin\theta_m} \qquad (4.2)$$

$$r_p^{m\to i} = -\frac{\cos\theta_m \sin\theta_m - \cos\theta_i \sin\theta_i}{\cos\theta_m \sin\theta_m + \cos\theta_i \sin\theta_i} \qquad (4.3)$$

$$r_p^{m\to t} = -\frac{\cos\theta_t \sin\theta_t - \cos\theta_m \sin\theta_m}{\cos\theta_t \sin\theta_t + \cos\theta_m \sin\theta_m} \qquad (4.4)$$

The coefficients are shown for s-polarization in (5.1-5.4).

$$t_s^{i \to m} = \frac{2\cos\theta_m \sin\theta_i}{\cos\theta_i \sin\theta_m + \cos\theta_m \sin\theta_i} \tag{5.1}$$

$$t_s^{m \to t} = \frac{2\cos\theta_t \sin\theta_m}{\cos\theta_m \sin\theta_t + \cos\theta_t \sin\theta_m} \tag{5.2}$$

$$r_s^{m \to i} = -\frac{\cos\theta_i \sin\theta_m - \cos\theta_m \sin\theta_i}{\cos\theta_m \sin\theta_i + \cos\theta_m \sin\theta_i} \tag{5.3}$$

$$r_s^{m \to t} = -\frac{\cos\theta_m \sin\theta_t - \cos\theta_t \sin\theta_m}{\cos\theta_m \sin\theta_t + \cos\theta_t \sin\theta_m} \tag{5.4}$$

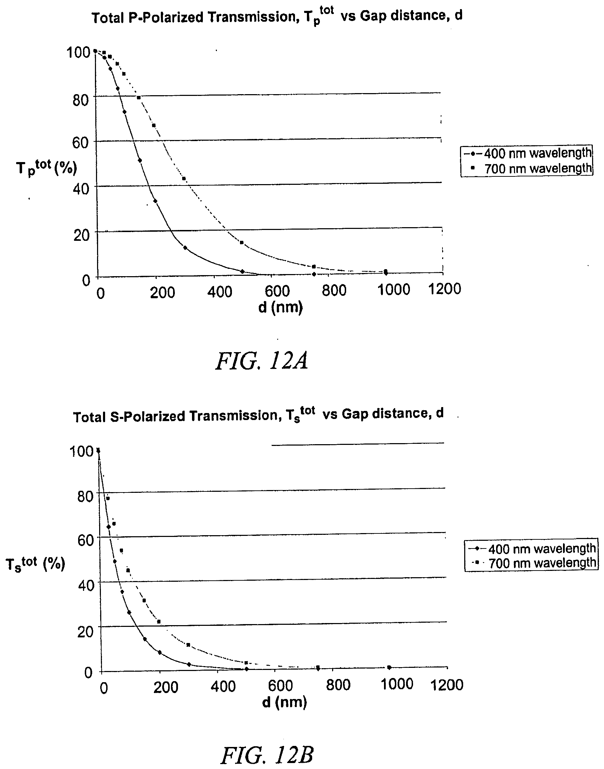

Total p-polarized transmission is solved as function of gap distance and wavelength (6) and the results are plotted on FIG. 12A.

$$T_p^{tot} = \frac{3.686}{e^{4.443\frac{d}{\lambda}} + e^{-4.443\frac{d}{\lambda}} + 1.686} \tag{6}$$

Total s-polarized transmission is solved as function of gap distance and wavelength (7) and the results are plotted in FIG. 12B.

$$T_s^{tot} = \frac{1.437}{e^{4.443\frac{d}{\lambda}} - e^{-4.443\frac{d}{\lambda}} - 0.5604} \tag{7}$$

The total transmission and total reflection states occur at $d_t$ = 0 nm and $d_r$ > 1000 nm, respectively, for the visible spectrum of light (400 nm - 700 nm). This provides a minimum operating criterion for a CBLS and indicates that the total transmission state, without perfectly flat surfaces, requires that the quartz prisms be compressed together.

In the light conversion phase, the light containment chamber receives and contains the intensified light beam and facilitates the harnessing of the radiation pressure provided by the light beam. The multiplied contained beam is directed on two near total reflection surfaces (NTRS). The containment chamber functions to effect continuous reflections of the contained light beam on the NTRS, until energy embodied in the light beam is depleted.

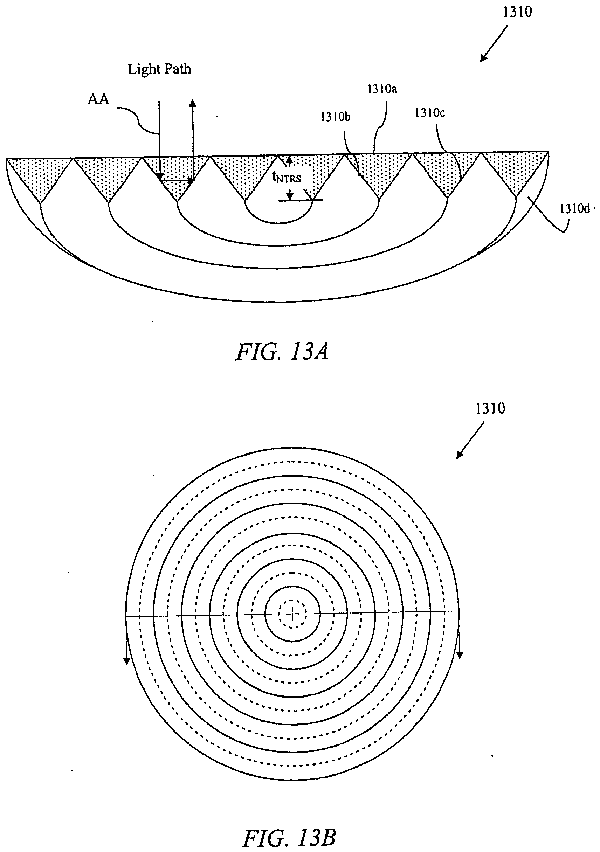

In this embodiment, the movable mirror and the reflective surface(s) are provided by a movable quartz prism 1310. FIG. 13A provides a plan view of the prism 1310 depicting a transparent front face or surface 1310a and two angled, reflective faces or surfaces 13b, 13c positioned within the prism body 1310d. The cross-sectional view of FIG. 13B reveals, in better detail, the relative positions of the reflective surfaces 1310b, 1310c and the angular V-shape these surfaces 1310a, 310b form. As shown in the plan view of FIG. 13A, the top and bottom circular edges of the reflective surfaces 1310b, 1310c outline a series of concentric circles below the front surface 310a of the prism 1310. The view of FIG. 13B also indicates the directed, predetermined path of a light beam AA toward the initial reflective surface 1310b, from the initial reflective surface 1310b to the return reflective surface 1310c, and from the return reflective surface 1310c, through the front surface and in a direction away from the prism 1310. As will be described in more detail the below, the faces 1310a, 1310b, and 1310c are relatively positioned such that the light beam AA impacts or passes through the front face 1310a at about 90 degrees, each of the back faces 1310b, 1310c at about 45 degrees, and, again, the front face at about 90 degrees. As a result, the light beam AA passes through the transparent front face 1310a and reflects off each of the two back faces 1310b, 1310c as desired. In this regard, the prism 1310, including its surfaces or faces 1310a, 310b, 1310c, is referred to as a near total reflective surface (NTRS). As further explained below, operation of the movable prism 1310 and NTRS, in conjunction with a series of piezoelectric actuators operably associated therewith, provides an advantageous thermal control technique.

A near total reflective surface (NTRS), as employed herein, utilizes total internal reflection to eliminate losses from repeated reflections, even though participating media causes energy absorption and red-shift causes energy dissipation. The NTRS provides, therefore, an effective mirror surface that significantly outperforms commercially available mirrors.

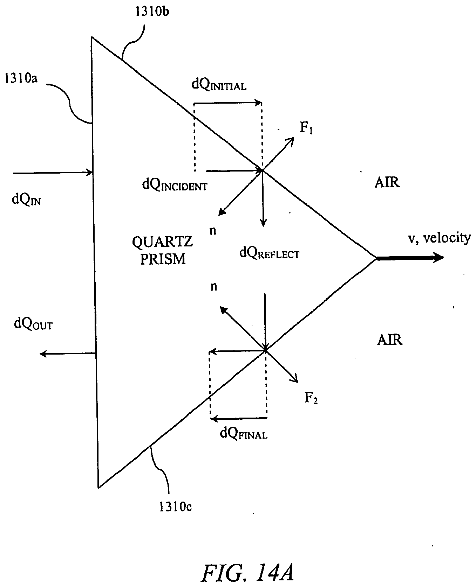

To explain the principles that allow for this improved performance, reference is now made to FIG. 14. FIG. 14 provides an illustration of the travel of the light beam AA in the NTRS, as represented by an energy packet. An initial energy packet, $dQ_{INITIAL}$, is incident on a surface with a velocity, v, moving directly away. The velocity vector is directly aligned with this initial energy packet direction vector. The resulting incident energy, $dQ_{INCIDENT}$, is reduced by red-shift, a function of the speed of light, c as (8).

$$dQ_{INCIDENT} = dQ_{INITIAL} \left( \frac{c-v}{c} \right) \qquad (8)$$

Snell's law [4] describes light refraction so that when the resulting refraction angle becomes imaginary the light is totally internally reflected. The reflected energy, $dQ_{REFLECT}$, is equal to the incident energy as (9)

$$dQ_{REFLECT} = dQ_{INCIDENT} \qquad (9)$$

Since the reflected energy contacts the other side of the prism at a right angle to the velocity vector there is no red-shift, hence $dQ_{FINAL}$, is equal to the reflected energy as (10)

$$dQ_{REFLECT} = dQ_{FINAL} \qquad (10)$$

Although the incident energy is less with a higher velocity, the resulting force is nearly the same. The work output from two equal forces, one against a lower surface velocity and the other against a higher surface velocity is not the same. The higher surface velocity will produce a higher work output, as shown in Eq. (1), because the final velocity (first square term) is referenced from the initial velocity (second square term). If red-shift approaches the reflectivity of the mirror, by moving the mirror surface fast enough, the contained energy will be dissipated through red-shifting, thereby lowering the residual heat. Stacked piezoelectric actuators in resonance provide a mechanism for efficiently converting mechanical work into electricity and obtaining a high NTRS velocity for red-shifting [5]. In addition to effecting conversion of radiation pressure into mechanical work, the combination of the NTRS and the actuators, as taught herein, serves as a technical solution to the potential technical problem of thermal control.

Participating media effects radiation exchange through a volume. The media (or medium) through which the radiation travels can cause attenuation. For simple materials, such as a gas at radiative equilibrium, the dependence on wavelength can be ignored. This is also possible for solids such as quartz. This simplification allows the use of a simple absorption coefficient [3].

The initial energy packet, $dQ_{INITIAL}$, enters the region where it can interact, or refract as shown, where it encounters the participating media. As the energy packet travels through the participating media it losses media as that is absorbed, $dQ_{ABSORBED}$, by the media. As the energy packet exits the media, the transmitted energy, $dQ_{TRANSMITTED}$, can again interact, or refract as shown, with the participating media.

An energy balance can be written for the energy packets as (11).

$$dQ_{INITIAL} = dQ_{ABSORBED} + dQ_{TRANSMITTED} \qquad (11)$$

The transmitted energy left after absorption is calculated using the absorption coefficient as (12)

$$dQ_{TRANSMITTED} = dQ_{INITIAL} \, e^{-at} \qquad (12)$$

The absorbed energy can be calculated as (13)

$$dQ_{ABSORBED} = dQ_{INITIAL} \left( 1 - e^{-at} \right) \qquad (13)$$

The NTRS effective reflectance, $\rho_{NTRS}$, can be calculated as (14)

$$\rho_{NTRS} = \frac{dQ_{OUT}}{dQ_{IN}} = \rho_{QUARTZ}\, e^{-at\left(\frac{c-v}{c}\right)} \qquad (14)$$

Note that scattering is assumed to be negligible and negative absorption is not considered in this case [3]. The quartz surface reflectance, $\rho_{QUARTZ}$, is included in $dQ_{OUT}$ contains the energy reflected when $dQ_{IN}$ enters the quartz media.

The electric generation phase occurs simultaneously with the light converter phase. The stacked resonating piezoelectric actuators are attached directly to the NTRSs. For the duration of the light convert phase, the actuators are contracting providing the necessary thermal control benefit of red-shifting the contained light by moving the NTRS faces away from the incident beam at a high velocity. The additional electric current from the force applied by the light through the NTRSs to the piezoelectric actuators is then collected using an H-Bridge (or similar) circuit. It should be noted that employment of piezoelectric actuators as an energy transmission components is generally known. Its integration herein shall be apparent to one skilled in the art provided the present disclosure.

Applicant now provides a system and method of modeling for the engine. Five temporal ray tracing capabilities are provided:

(1) force accumulation from radiation pressure exerted by reflections.
(2) variable optics to model containment using light switching,
(3) enclosures to model flux delta from beam multiplying and splitting,
(4) loss of energy from redshift,
(5) energy absorption within participating media,

The first capability provides a calculation of radiation pressure (or radiation force) that includes forces from reflected energy, in addition to radiation pressure from only a direct heating component to a node. Radiation pressure from reflected energy is the most fundamental concept of modeling an operational photon engine by modeling internal momentum transfer from photons to a movable piston during multiple reflections.

The second capability is light containment by time varying optical properties. This capability is required to extend the simulation of a photon engine to include multiplication of a light beam. This is accomplished by modeling a surface that begins as highly reflective, then after a finite amount of time instantly changing the optical properties to allow transmission. After a subsequent finite amount of time, the surface is instantly changed back to highly reflective. Unlike the first case capability, having time dependent properties allows for the multiplication of the beam power as shown in the third case.

The third capability is flux change when switching between enclosures. This capability calculates the flux change in a source (or flux delta) when a long lower flux beam is wrapped around itself then split by variable optics switch to produce a shorter higher flux beam. This process effectively compresses the beam length, and since the total energy remains the same, the result is a higher flux beam.

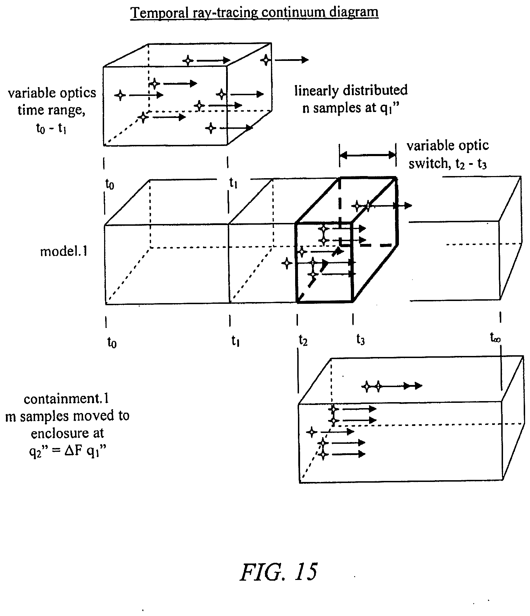

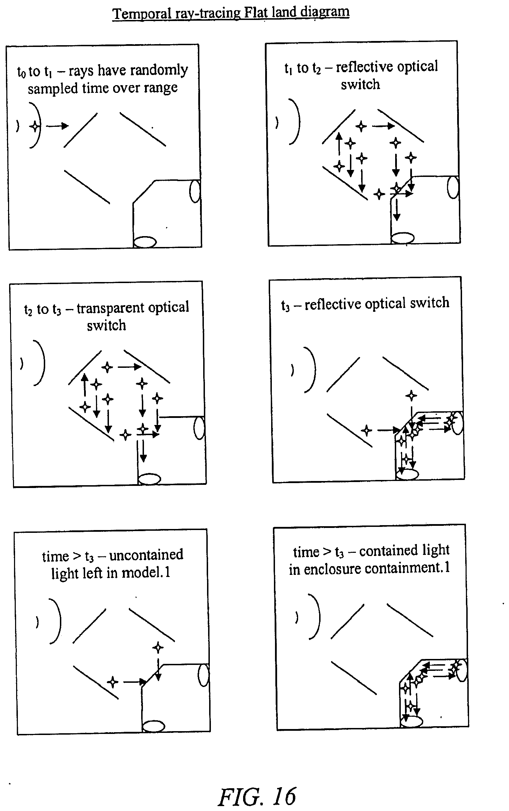

FIGS. 15 and 16 provide a continuum view of temporal ray-tracing and Flat land (i.e. timesheet) view of temporal ray-tracing.

The flux delta, $\Delta F$, is calculated by taking into account the number of sample rays, n, the number of contained rays, m, and the different sample times, initial sample range, to to ti, and variable optics switch range, $t_2$ to $t_3$ as (15)

$$\Delta F = \frac{m}{n}\frac{\left(t_1 - t_0\right)}{\left(t_3 - t_2\right)} \qquad (15)$$

The flux delta can be used to determine the containment chamber flux, $q''_2$, of the multiplied beam from the model.1 flux, $q''_1$, as (16)

$$q''_2 = \Delta F q''_1 \qquad (16)$$

The fourth capability is the loss of energy in beam strength due to red shift. In a machine with momentum transfer to a movable piston, the movement of the piston away from the incident beam will cause red shifting of the reflected energy. This can be modeled by simply reducing the reflected ray energy based on the velocity the surface moves during the reflection.

The fifth capability is the loss of energy from absorption by participating media. This phenomenon occurs when light is transmitted through a solid such as quartz. The light path inside a photon engine requires many interactions with quartz. The interaction inside the light multiplier will result in rays traveling long distances inside quartz. The longer a ray travels inside quartz the more energy lost to absorption. This results in lower transmission and heating of the participating media. The most desirable operation of a photon engine is to have the lowest absorption (highest transmission) so the energy is available for momentum transfer.

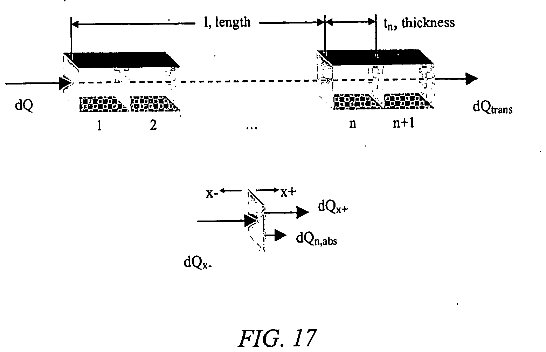

FIG. 17 illustrates a control volume approach to modeling participating media. Instead of representing the participating media region as a continuous volume, meshing the region into smaller control volumes allows the absorption to be quantified discretely as it moves through a region. As shown in Figure 15, an energy balance on the interface between two control volumes provides the internal heating, $dQ_{n,abs}$, and the energy entering the subsequent control volume, $dQ_{x+}$, as (17.1-17.2)

$$dQ_{x-} = dQ_{x+} + dQ_{n,abs} \qquad (17.1)$$

$$dQ_{n,abs} = dQ_{x+} \left( e^{-\alpha(l+t_n)} - e^{-\alpha l} \right) \qquad (17.2)$$

An analysis was performed combining each of the temporal ray tracing capabilities into a single simulation that accurately simulates an exemplary working engine. Care must be taken to avoid aberrations when modeling light as a ray. This distortion occurs when light is focused to a point. The engine design has avoiding aberrations. Brewster's angle is also avoided by always totally internally reflecting and transitioning from one media to another along surfaces normal without any angle of incidence.

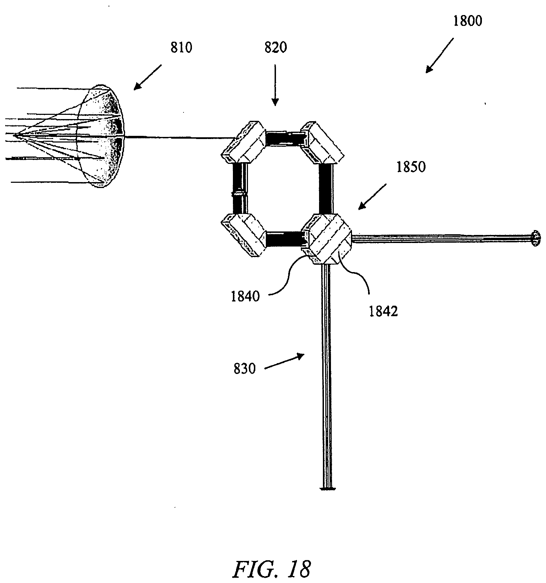

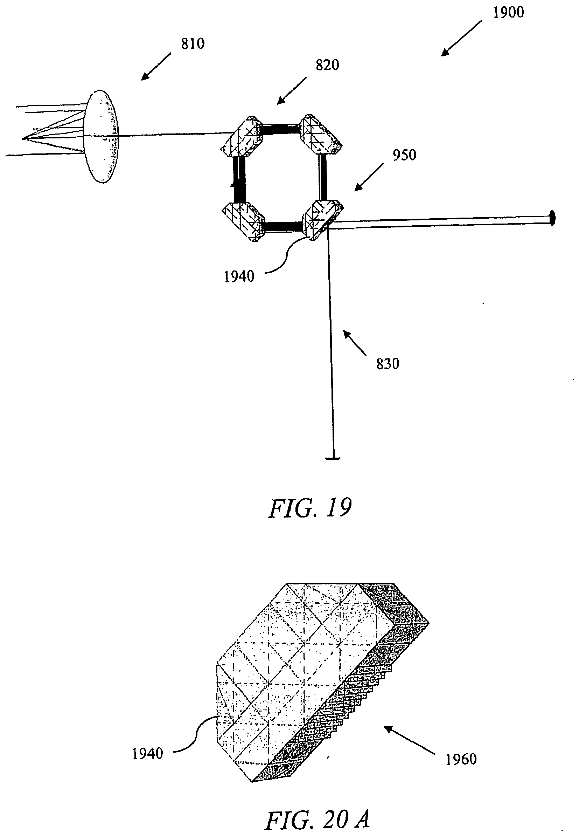

FIG. 18 illustrates an exemplary photon engine 1800, including the light ray or beam paths for the engine 1800. The engine employs a switch 1850 as previously described (with two adjacent prisms 1840, 1842). FIG. 19 depicts an alternative engine 1900 and associated ray paths. The engine 1900 employs a single prism for a light switch 1950. Whereas a second prism (*e.g.*, 1942) previously provided a portion of the containment chamber, a linear switch surface or simply linear switch 1950 now provides the second half of the compression boundary switch.

The linear switch 1960 effectively reduces the distance a light beam travels through quartz material of the secondary prism (relative to the design of FIG. 18 and earlier described designs). This alternative design is similar to that of the NTRS, in that it uses triangular conic sections 1960a. The switch 1960 is comprised of a series of linear triangular prisms 1960a. Light enters normal to one of the faces and totally internally reflects (TIR) when the light switch is reflective. When the light switch is transparent, the flat surface of the linear switch is compressed against the primary prism 1940. This design may be extended to any prism in the engine to reduce the amount of attenuation due to the quartz participating media.

A simulation tool was used to synthesize the design by augmenting the CBLS to have a linear triangular prism design (linear switch) that is similar to the NTRS design. Using a spreadsheet, the efficiency of each design has been estimated using the number of reflections inside the containment chamber per ray, estimate of $\rho_{NTRS}$ and $\tau_{SWITCH}$, and lowest quartz absorption coefficient, $\alpha$. As reflected in Table 1, the use of a linear switch achieves a significantly higher efficiency. In doing so, yet another technical solution (linear switch) is implemented to solve a technical problem or challenge (efficiency, and economy in size and manufacturing).

Table 1 - Efficiency results for two Photon Engine optical switch designs.

| | # of bounces per ray, z | $\rho_{NTRS}$ | $\tau_{SWITCH}$ | $\alpha$-QUARTZ (cm$^{-1}$) | Efficiency (%) |
|---|---|---|---|---|---|
| Standard CBLS Switch | 10469 | 0.99999 | 0.9999 | $1 \times 10^{-5}$ | 2.07 |
| Linear Switch | 136534 | 0.99999 | 0.99999 | $1 \times 10^{-5}$ | 15.59 |

It should be understood, however, that various arrangements and deployments of the components of inventive apparatus in accordance with the invention may be made and will vary according to the particular environment and applications. However, in any such applications, various aspects of the inventions will be applicable, as described above. For example, various aspects of the apparatus described herein, such as the containment chamber design, the optical switching devices, and the light multiplier or light wave intensifier may be incorporated with other mechanical devices, including other engines. As a further example, the piston and cylinder assembly may be replaced by another energy system such as an energy storage device (e.g., a spring device). Furthermore, various aspects of the described invention may be employed in other applications without the other components. For example, a combination of the light switch and NTRS mirror (moveable or non-moveable) may be employed in a switching, communicative, or control operation (independent of a photon engine, engine components, or other components described herein). Other examples include employment of the light intensifier or multiplier and/or light switch in similar switching, communicative, or controls applications.

The foregoing description of the present invention has been presented for purposes of illustration and description. It is to be noted that the description is not intended to limit invention to the apparatus, and method disclosed herein. Various aspects of the invention as described above may be applicable to other types of engines and mechanical work devices and methods for communicating radiation pressure. It is to be noted also that the invention is embodied in the method described, the apparatus utilized in the methods, and in the related components and subsystems. These variations of the invention will become apparent to one skilled in the optics, engine art, or other relevant art, provided with the present disclosure. Consequently, variations and modifications commensurate with the above teachings and the skill and knowledge of the relevant art are within the scope of the present invention. The embodiments described and illustrated herein are further intended to explain the best modes for practicing the invention, and to enable others skilled in the art to utilize the invention and other embodiments and with various modifications required by the particular applications or uses of the present invention.

**Claims**

1. A method of producing a power output from a light beam, the method comprising:

   providing a primary prism (1101) having a light beam inlet, the primary prism (1101) comprising polished crystalline quartz having a given index of refraction, the primary prism (1101) comprising multiple total internal reflecting surfaces including a primary face;
   producing a processed light beam by directing an initial light beam along the initial light path and into a given facet of a light expander/contractor device (820) communicating with the primary prism (1101), the light expander/contractor device (820) expanding light beams that enter the light expander/contractor device from a given direction, producing an exiting light beam;
   reflecting the exiting light beam from a total internal reflecting surface of the primary prism (1101) to a next total internal reflecting surface of the primary prism (1101) until the exiting light beam reenters the light expander/contractor device (820) from the same direction as the initial light beam but at a different facet, thereby repeatedly rotating the exiting light beam within the primary prism (1101) and producing the processed light beam;
   selectively operating an optic switch configured to control communication of the processed light beam between the primary prism (1101) and a containment chamber (830), the containment chamber (830) comprising a predetermined reflective light path, and the optic switch comprising a linear switch (1960) that comprises a flat surface, the linear switch being adapted to provide control of the compression boundary between the primary face and the flat surface;
   containing and repeatedly propagating the processed light beam along the predetermined light path in the containment chamber producing a propagated processed light beam, the predetermined light path comprising one or more moving reflective elements and the flat surface of the linear switch (1960);
   communicating the power output of the propagated processed light beam to an energy system communicating with the one or more moving reflective prisms,
   wherein the processed light beams repeatedly impact the one or more moving reflective prisms,
   **characterized in that**:

   the linear switch (1960) further comprises a series of linear triangular prisms; and
   the moving reflective elements comprise prisms comprising a near total reflective surface (NTRS), the predetermined light path passing through an initial transparent surface defined by at least a portion of a transparent front surface of the NTRS, to a first reflective surface extending at a first angle relative to the initial transparent surface, to communicate at a second angle with one or more second reflective surfaces extending at a third angle relative to the initial transparent surface, the one or more NTRS being adapted to totally internally reflect the light beam.

2. The method of claim 1, wherein:

   the linear switch (1960) is substantially totally internally reflective in an open mode when the flat surface is not compressed against the primary face; and,
   the linear switch (1960) is transparent in a closed mode when the flat surface is compressed against the primary face; and,
   selectively operating the optic switch comprises changing the optic switch between modes selected from the group consisting of the open mode and the closed mode.

3. The method of claim 1 or 2, wherein selectively operating the optic switch comprises decompressing the flat surface relative to the primary face of the primary prism (1101).

4. The method of any one of the preceding claims, wherein selectively operating the optic switch splits the processed light beam into multiple processed light beams and/or minimizes communication of the multiple processed light beams from the containment chamber (830).

5. The method of any one of the preceding claims, further comprising:

   reversing the direction of light, thereby redirecting the light upon itself and producing a fully processed light beam; and,
   selectively operating the optic switch to communicate the fully processed light beam between the primary prism (1101) and the containment chamber (830), thereby producing multiple fully processed light beams;
   containing and repeatedly propagating the multiple fully processed light beams in the containment chamber (830) along the predetermined reflective light path, producing a power output;
   communicating the output to the energy system.

6. The method of any one of the preceding claims, further comprising moving the one or more reflective prisms at a velocity sufficiently high to red-shift the processed light beams, wherein optionally the red-shift is effective to reduce residual heat.

7. The method of any one of the preceding claims, wherein the energy system is a crank shaft assembly and the amount of energy transferred to the energy system causes the crank shaft assembly to reciprocate.

8. The method of any one of the preceding claims, further comprising:

   converting the power output to electric output; and,
   collecting the electric output, optionally using an H-Bridge circuit.

9. The method of any one of the preceding claims, wherein the primary prism (1101) comprises quartz.

10. The method of any one of the preceding claims, further comprising improving containment of light in the containment chamber (830) by rapidly switching between compressing the primary face to a distance of 0 nm from the flat surface, and rapidly decompressing the primary face to a distance of greater than 1000 nm from the flat surface.

11. The method of any one of the preceding claims, wherein:

   the one or more reflective prisms have an initial velocity (vo); and,
   a greater amount of work is generated by the energy system at a greater initial velocity.

12. The method of any one of the preceding claims, wherein the amount of energy transferred to the energy system generates an amount of work (W) calculated according to the following equation:

$$W = \frac{1}{2}m\left(\left(\frac{p_0 A_m t_0}{m}\left(\frac{1-\left(\rho_m \tau_s\right)^z}{1-\rho_m \tau_s}\right)+v_0\right)^2 - v_0^{\ 2}\right) \qquad (1)$$

wherein:

   $p_o$ is an initial radiation pressure on a reflective prism (1101) impacted by the processed light beams;
   $A_m$ is an area of the reflective prism (1101) impacted by the processed light beams;
   $t_0$ is an initial time duration of impact of the processed light beams on the reflective prism (1101);
   $m$ is a mass of the reflective prism (1101) and the energy system;
   $\rho_m$ is an effective reflectance of the processed light beams by the reflective prism (1101);

$\tau_s$ is an effective transmission of the processed light beam through the optic switch;

$z$ is a number of repeated impacts of the processed light beams against the reflective prism (1101); and,

$v_0$ is an initial velocity of the reflective prism impacted by the processed light beams.

**13.** The method of any one of the preceding claims, further comprising:

collecting and concentrating light using one or more collective mirrors to produce a concentrated light beam;

directing the concentrated light beam along the initial light path and through the light expander/contractor device (820), thereby producing a fully processed concentrated light beam;

selectively operating the optic switch controlling communication of the fully processed concentrated light beam between the primary prism (1101) and the containment chamber (830), thereby splitting the fully processed concentrated light beam and producing multiple fully processed concentrated light beams;

containing and repeatedly propagating the multiple processed concentrated light beams along the predetermined light path in the containment chamber (830), producing a power output;

communicating the power output to the energy system.

**14.** The method of any one of the preceding claims, further comprising:

directing the processed light beams at an initial angle to the initial transparent surface;

reflecting a first portion of the processed light beams from the initial transparent surface to produce a first reflecting;

passing a second portion of the processed light beams through the initial transparent surface, through a first part of the NTRS prism at a first angle to the first reflective surface, the first part of the NTRS prism (1101) absorbing a first quantity of energy and producing a first remainder of the light beams;

totally internally reflecting the first remainder of the processed light beams at a second angle relative to the first reflective surface through a second part of the NTRS prism, the second part of the NTRS prism (1101) absorbing a second quantity of energy and producing a second remainder of the processed light beams; and totally internally reflecting the second remainder of the processed light beams at a third angle relative to the second reflective surface and through a third part of the NTRS prism, the third part of the NTRS prism absorbing a third quantity of energy and producing a third remainder of the processed light beams;

passing the third remainder of the processed light beams through the initial transparent surface at a final angle to produce a second reflecting;

wherein the combination of the first reflecting and the second reflecting substantially totally reflects the processed light beams.

**15.** A photon engine comprising one or more cylinders comprising:

a primary prism (1101) having a light beam inlet and comprising multiple total internal reflecting faces including a primary face, the primary prism (1101) comprising polished crystalline quartz having a given index of refraction;

a light expander/contractor device (820) communicating with the light beam inlet, the light expander/contractor device (820) comprising facets adapted to produce a processed light beam by expanding the diameter of a light beam entering from a given direction;

a containment chamber (830) comprising a predetermined reflective light path comprising one or more movable reflective elements arranged to communicate power output with an energy system;

an optic switch comprising a linear switch (1960) comprising a flat surface, the linear switch (1960) being adapted to provide control of the compression boundary between the primary face and the flat surface, the predetermined light path further comprising the flat surface of the linear switch;

**characterized in that**:

the linear switch further comprises a series of linear triangular prisms; and

the one or more movable reflective elements comprise prisms comprising a near total reflective surface (NTRS) comprising one or more NTRS prism each comprising an initial transparent surface defined by at least a portion of the transparent surface, a first reflective surface extending at a first angle relative to the initial transparent surface to communicate at a second angle with one or more second reflective surfaces extending at a third angle relative to the initial transparent surface, the one or more NTRS being adapted to totally internally reflect the light beam.

**16.** The photon engine of claim 15, wherein:

the optic switch is adapted to split the processed light beam multiple times to produce multiple processed light beams; and/or

a piezoelectric actuator is adapted to compress and decompress the flat surface of the linear switch (1960) relative to the primary face of the primary prism (1101); and/or

the photon engine is further adapted to reverse the direction of the light beam; and/or

the energy system is a piston and a crank shaft assembly, and/or

the energy system is a spring device; and/or

the photon engine comprises multiple cylinders; and/or

the one or more reflective prisms are operatively associated with an H-Bridge circuit effective to collect electric output.

**Patentansprüche**

1. Verfahren des Erzeugens einer Leistungsabgabe von einem Lichtstrahl, wobei das Verfahren Folgendes umfasst:

Bereitstellen eines primären Prismas (1101) mit einem Lichtstrahleinlass, wobei das primäre Prisma (1101) geschliffener kristalliner Quarz mit einem vorgegebenen Brechungsindex ist, wobei das primäre Prisma (1101) mehrere Oberflächen mit innerer Totalreflexion einschließlich einer primären Fläche umfasst;

Erzeugen eines bearbeiteten Lichtstrahls durch Leiten eines anfänglichen Lichtstrahls entlang des anfänglichen Lichtwegs und in eine vorgegebene Facette einer Lichtexpansions/- verengungs-Vorrichtung (820), die mit dem primären Prisma (1101) kommuniziert, wobei die Lichtexpansions/-verengungs-Vorrichtung (820) Lichtstrahlen, die in die Lichtexpansions/- verengungs-Vorrichtung aus einer vorgegebenen Richtung eintreten, expandiert, wodurch ein austretender Lichtstrahl erzeugt wird;

Reflektieren des existierenden Lichtstrahls von einer Oberfläche mit innerer Totalreflexion des primären Prismas (1101) zu einer nächsten Oberfläche mit innerer Totalreflexion des primären Prismas (1101), bis der existierende Lichtstrahl erneut in die Lichtexpansions/-verengungs-Vorrichtung (820) aus der gleichen Richtung wie der anfängliche Lichtstrahl, doch an einer anderen Facette, eintritt, wodurch der existierende Lichtstrahl in dem primären Prisma (1101) wiederholt rotiert wird und der bearbeitete Lichtstrahl erzeugt wird;

selektives Betreiben eines optischen Schalters, der konfiguriert ist, um Kommunikation des bearbeiteten Lichtstrahls zwischen dem primären Prisma (1101) und einer Eindämmungskammer (830) zu steuern, wobei die Eindämmungskammer (830) einen vorbestimmten Reflexionslichtweg umfasst und der optische Schalter einen Linearschalter (1960) umfasst, der eine flache Oberfläche umfasst, wobei der Linearschalter angepasst ist, um Steuerung der Kompressionsgrenze zwischen der primären Fläche und der flachen Oberfläche bereitzustellen;

Enthalten und wiederholtes Ausbreiten des bearbeiteten Lichtstrahls entlang des vorbestimmten Lichtwegs in der Eindämmungskammer, wodurch ein ausgebreiteter bearbeiteter Lichtstrahl erzeugt wird, wobei der vorbestimmte Lichtweg ein oder mehrere bewegliche reflektierende Elemente und die flache Oberfläche des Linearschalters (1960) umfasst;

Kommunizieren der Leistungsabgabe des ausgebreiteten, bearbeiteten Lichtstrahls an ein Energiesystem, das mit dem einen oder den mehreren beweglichen reflektierenden Prismen kommuniziert, wobei die bearbeiteten Lichtstrahlen auf das eine oder die mehreren beweglichen reflektierenden Prismen wiederholt einwirken, **dadurch gekennzeichnet, dass**:

der Linearschalter (1960) ferner eine Reihe von linearen Dreiecksprismen umfasst; und

die beweglichen reflektierenden Elemente Prismen umfassen, die eine nahezu vollständig reflektierende Oberfläche (near total reflective surface, NTRS) umfassen, wobei der vorbestimmte Lichtweg durch eine anfänglich transparente Oberfläche, die durch mindestens einen Abschnitt einer transparenten Vorderseite der NTRS definiert ist, zu einer ersten reflektierenden Oberfläche verläuft, die sich in einem ersten Winkel relativ zu der anfänglichen transparenten Oberfläche erstreckt, um in einem zweiten Winkel mit einer oder mehreren zweiten reflektierenden Oberflächen zu kommunizieren, die sich in einem dritten Winkel relativ zu der anfänglichen transparenten Oberfläche erstrecken, wobei die eine oder mehreren NTRS für eine innere Totalreflexion des Lichtstrahls angepasst sind.

2. Verfahren nach Anspruch 1, wobei:

der Linearschalter (1960) in einem offenen Modus im Wesentlichen in innerer Totalreflexion ist, wenn die flache Oberfläche nicht gegen die primäre Fläche gepresst ist; und

der Linearschalter (1960) in einem geschlossenen Modus transparent ist, wenn die flache Oberfläche gegen die primäre Fläche gepresst ist; und
selektives Betreiben des optischen Schalters das Verändern des optischen Schalters zwischen Modi umfasst, ausgewählt aus der Gruppe bestehend aus dem offenen Modus und dem geschlossenen Modus.

3.  Verfahren nach Anspruch 1 oder 2, wobei das selektive Betreiben des optischen Schalters das Dekomprimieren der flachen Oberfläche relativ zu der primären Fläche des primären Prismas (1101) umfasst.

4.  Verfahren nach einem der vorhergehenden Ansprüche, wobei das selektive Betreiben des optischen Schalters den bearbeiteten Lichtstrahl in mehrere bearbeitete Lichtstrahlen aufteilt und/oder die Kommunikation der mehreren bearbeiteten Lichtstrahlen aus der Eindämmungskammer (830) minimiert.

5.  Verfahren nach einem der vorhergehenden Ansprüche, ferner umfassend:

    Umkehren der Richtung des Lichts, wodurch das Licht auf sich selbst gerichtet wird und ein vollständig bearbeiteter Lichtstrahl erzeugt wird; und
    selektives Betreiben des optischen Schalters, um den vollständig bearbeiteten Lichtstrahl zwischen dem primären Prisma (1101) und der Eindämmungskammer (830) zu kommunizieren, wodurch mehrere vollständig bearbeitete Lichtstrahlen erzeugt werden;
    Enthalten und wiederholtes Ausbreiten der mehreren vollständig bearbeiteten Lichtstrahlen in der Eindämmungskammer (830) entlang des vorbestimmten reflektierenden Lichtwegs, wodurch eine Leistungsabgabe erzeugt wird;
    Kommunizieren der Abgabe an das Energiesystem.

6.  Verfahren nach einem der vorhergehenden Ansprüche, ferner umfassend das Bewegen des einen oder der mehreren reflektierenden Prismen in einer Geschwindigkeit, die ausreichend hoch ist, um die bearbeiteten Lichtstrahlen rotzuverschieben, wobei optional die Rotverschiebung wirksam ist, um Restwärme zu verringern.

7.  Verfahren nach einem der vorhergehenden Ansprüche, wobei das Energiesystem eine Kurbelwellenanordnung ist und die Menge von Energie, die an das Energiesystem übertragen wird, verursacht, dass sich die Kurbelwellenanordnung hin- und herbewegt.

8.  Verfahren nach einem der vorhergehenden Ansprüche, ferner umfassend:

    Umwandeln der Leistungsabgabe zu elektrischer Leistung; und
    Aufnehmen der elektrischen Leistung, optional unter Verwendung einer H-Brückenschaltung.

9.  Verfahren nach einem der vorhergehenden Ansprüche, wobei das primäre Prisma (1101) Quarz umfasst.

10. Verfahren nach einem der vorhergehenden Ansprüche, ferner umfassend das Verbessern der Eindämmung von Licht in der Eindämmungskammer (830) durch schnelles Schalten zwischen dem Komprimieren der primären Fläche auf einen Abstand von 0 nm von der flachen Oberfläche und schnellem Dekomprimieren der primären Fläche auf einen Abstand von größer als 1000 nm von der flachen Oberfläche.

11. Verfahren nach einem der vorhergehenden Ansprüche, wobei:

    das eine oder die mehreren reflektierenden Prismen eine Anfangsgeschwindigkeit ($v_0$) haben; und
    eine größere Menge an Arbeit durch das Energiesystem mit einer größeren Anfangsgeschwindigkeit erzeugt wird.

12. Verfahren nach einem der vorhergehenden Ansprüche, wobei die Menge an Energie, die an das Energiesystem übertragen wird, eine Menge von Arbeit (W) erzeugt, berechnet gemäß der folgenden Gleichung:

$$W = \frac{1}{2}m\left(\left(\frac{p_0 A_m t_0}{m}\left(\frac{1-(\rho_m \tau_s)^\varepsilon}{1-\rho_m \tau_s}\right) + v_0\right)^2 - v_0^{\ 2}\right) \qquad (1)$$

wobei:

*po* ein anfänglicher Strahlungsdruck auf einem reflektierenden Prisma (1101) ist, beeinflusst durch die bearbeiteten Lichtstrahlen;

$A_m$ eine Fläche des reflektierenden Prismas (1101) ist, beeinflusst durch die bearbeiteten Lichtstrahlen;

*to* eine anfängliche Zeitdauer von Einfluss der bearbeiteten Lichtstrahlen auf das reflektierende Prisma (1101) ist;

*m* eine Masse des reflektierenden Prismas (1101) und des Energiesystems ist;

$\rho_m$ ein wirksames Reflexionsvermögen der bearbeiteten Lichtstrahlen durch das reflektierende Prisma (1101) ist;

$\tau_s$ eine wirksame Übertragung des bearbeiteten Lichtstrahls durch den optischen Schalter ist;

*z* eine Anzahl von wiederholten Einwirkungen der bearbeiteten Lichtstrahlen gegen das reflektierende Prisma (1101) ist; und

$v_0$ eine Anfangsgeschwindigkeit des reflektierenden Prismas ist, das durch die bearbeiteten Lichtstrahlen beeinflusst wird.

**13.** Verfahren nach einem der vorhergehenden Ansprüche, ferner umfassend:

Aufnehmen und Konzentrieren von Licht unter Verwendung von einem oder mehreren kollektiven Spiegeln, um einen konzentrierten Lichtstrahl zu erzeugen;

Leiten des konzentrierten Lichtstrahls entlang des anfänglichen Lichtwegs und durch die Lichtexpansions/-verengungs-Vorrichtung (820), wodurch ein vollständig bearbeiteter, konzentrierter Lichtstrahl erzeugt wird;

selektives Betreiben des optischen Schalters, wodurch Kommunikation des vollständig bearbeiteten, konzentrierten Lichtstrahls zwischen dem primären Prisma (1101) und der Eindämmungskammer (830) gesteuert wird, wodurch der vollständig bearbeitete, konzentrierte Lichtstrahl aufgeteilt wird und mehrere vollständig bearbeitete, konzentrierte Lichtstrahlen erzeugt werden;

Enthalten und wiederholtes Ausbreiten der mehreren bearbeiteten, konzentrierten Lichtstrahlen entlang des vorbestimmten Lichtwegs in der Eindämmungskammer (830), wodurch eine Leistungsabgabe erzeugt wird;

Kommunizieren der Leistungsabgabe an das Energiesystem.

**14.** Verfahren nach einem der vorhergehenden Ansprüche, ferner umfassend:

Leiten der bearbeiteten Lichtstrahlen in einem anfänglichen Winkel zu der anfänglichen transparenten Oberfläche;

Reflektieren eines ersten Abschnitts der bearbeiteten Lichtstrahlen von der anfänglichen transparenten Oberfläche, um eine erste Reflexion zu erzeugen;

Passieren eines zweiten Abschnitts der bearbeiteten Lichtstrahlen durch die anfängliche transparente Oberfläche durch einen ersten Teil des NTRS-Prismas in einem ersten Winkel zu der ersten reflektierenden Oberfläche, wobei der erste Teil des NTRS-Prismas (1101) eine erste Menge von Energie absorbiert und einen ersten Rest der Lichtstahlen erzeugt;

innere Totalreflexion des ersten Rests der bearbeiteten Lichtstrahlen in einem zweiten Winkel relativ zu der ersten reflektierenden Oberfläche durch einen zweiten Teil des NTRS-Prismas, wobei der zweite Teil des NTRS-Prismas (1101) eine zweite Menge von Energie absorbiert und einen zweiten Rest der Lichtstahlen erzeugt; und

innere Totalreflexion des zweiten Rests der bearbeiteten Lichtstrahlen in einem dritten Winkel relativ zu der zweiten reflektierenden Oberfläche durch einen dritten Teil des NTRS-Prismas, wobei der dritte Teil des NTRS-Prismas eine dritte Menge von Energie absorbiert und einen dritten Rest der Lichtstahlen erzeugt;

Passieren des dritten Rests der bearbeiteten Lichtstrahlen durch die anfängliche transparente Oberfläche in einem finalen Winkel, um eine zweite Reflexion zu erzeugen;

wobei die Kombination aus der ersten Reflexion und der zweiten Reflexion im Wesentlichen die bearbeiteten Lichtstrahlen vollständig reflektiert.

**15.** Photonenmotor, umfassend einen oder mehrere Zylinder, umfassend:

ein primäres Prisma (1101) mit einem Lichtstrahleinlass und das mehrere Oberflächen mit innerer Totalreflexion einschließlich einer primären Fläche umfasst, wobei das primäre Prisma (1101) geschliffenen kristallinen Quarz mit einem vorgegebenen Brechungsindex umfasst;

eine Lichtexpansions/-verengungs-Vorrichtung (820), die mit dem Lichtstrahleinlass kommuniziert, wobei die Lichtexpansions/-verengungs-Vorrichtung (820) Facetten umfasst, die angepasst sind, um einen bearbeiteten Lichtstrahl durch Expandieren des Durchmessers eines Lichtstrahls, der aus einer vorgegebenen Richtung eintritt, zu erzeugen;

eine Eindämmungskammer (830), die einen vorbestimmten Reflexionslichtweg umfasst, der ein oder mehrere bewegliche reflektierende Elemente umfasst, die angeordnet sind, um Leistungsabgabe mit einem Energiesystem zu kommunizieren;

einen optischen Schalter, der einen Linearschalter (1960) umfasst, der eine flache Oberfläche umfasst, wobei der Linearschalter (1960) angepasst ist, um Steuerung der Kompressionsgrenze zwischen der primären Fläche und der flachen Oberfläche bereitzustellen, wobei der vorbestimmte Lichtweg ferner die flache Oberfläche des Linearschalters umfasst;

**dadurch gekennzeichnet, dass**:

der Linearschalter ferner eine Reihe von linearen Dreiecksprismen umfasst; und

das eine oder die mehreren beweglichen reflektierenden Elemente Prismen umfassen, die eine nahezu vollständig reflektierende Oberfläche (NTRS) umfassen, umfassend ein oder mehrere NTRS-Prismen, die jeweils eine anfänglich transparente Oberfläche umfassen, die durch mindestens einen Abschnitt der transparenten Oberfläche definiert ist, wobei sich eine erste reflektierende Oberfläche in einem ersten Winkel relativ zu der anfänglichen transparenten Oberfläche erstreckt, um in einem zweiten Winkel mit einer oder mehreren zweiten reflektierenden Oberflächen zu kommunizieren, die sich in einem dritten Winkel relativ zu der anfänglichen transparenten Oberfläche erstrecken, wobei die eine oder mehreren NTRS für eine innere Totalreflexion des Lichtstrahls angepasst sind.

**16.** Photonenmotor nach Anspruch 15, wobei:

der optische Schalter angepasst ist, um den bearbeiteten Lichtstrahl mehrere Male aufzuteilen, um mehrere bearbeitete Lichtstrahlen zu erzeugen; und/oder

ein piezoelektrischer Aktuator angepasst ist, um die flache Oberfläche des Linearschalters (1960) relativ zu der primären Fläche des primären Prismas (1101) zu komprimieren und dekomprimieren; und/oder

der Photonenmotor ferner angepasst ist, um die Richtung des Lichtstrahls umzukehren; und/oder

das Energiesystem ein Kolben und eine Kurbelwellenanordnung ist und/oder

das Energiesystem eine Federvorrichtung ist; und/oder

der Photonenmotor mehrere Zylinder umfasst; und/oder

das eine oder die mehreren reflektierenden Prismen operativ mit einer H-Brückenschaltung verbunden sind, die wirksam ist, um elektrische Leistung aufzunehmen.

## Revendications

**1.** Procédé de production d'une puissance de sortie à partir d'un faisceau de lumière, le procédé comprenant :

la fourniture d'un prisme primaire (1101) ayant une entrée de faisceau de lumière, le prisme primaire (1101) comprenant du quartz cristallin poli ayant un indice de réfraction donné, le prisme primaire (1101) comprenant de multiples surfaces de réflexion totale interne incluant une face primaire ;

la production d'un faisceau de lumière traité en orientant un faisceau de lumière initial le long du chemin de lumière initial et dans une facette donnée d'un dispositif agrandisseur/contracteur de lumière (820) communiquant avec le prisme primaire (1101), le dispositif agrandisseur/contracteur de lumière (820) agrandissant des faisceaux de lumière qui entrent dans le dispositif agrandisseur/contracteur de lumière à partir d'une direction donnée, produisant un faisceau de lumière sortant ;

la réflexion du faisceau de lumière sortant depuis une surface de réflexion totale interne du prisme primaire (1101) jusqu'à une surface de réflexion totale interne suivante du prisme primaire (1101) jusqu'à ce que le faisceau de lumière sortant entre à nouveau dans le dispositif agrandisseur/contracteur de lumière (820) à partir de la même direction que le faisceau de lumière initial mais au niveau d'une différente facette, ainsi tournant à plusieurs reprises le faisceau de lumière sortant à l'intérieur du prisme primaire (1101) et produisant le faisceau de lumière traité ;

l'actionnement sélectif d'un commutateur optique configuré pour commander la communication du faisceau de lumière traité entre le prisme primaire (1101) et une chambre de confinement (830), la chambre de confinement (830) comprenant un chemin de lumière de réflexion prédéterminé, et le commutateur optique comprenant un commutateur linéaire (1960) qui comprend une surface plate, le commutateur linéaire étant adapté pour fournir une commande de la limite de compression entre la face primaire et la surface plate ;

le confinement et la propagation à plusieurs reprises du faisceau de lumière traité le long du chemin de lumière prédéterminé dans la chambre de confinement, produisant un faisceau de lumière traité propagé, le chemin de lumière prédéterminé comprenant un ou plusieurs éléments de réflexion mobiles et la surface plate du commutateur linéaire (1960) ;

la communication de la puissance de sortie du faisceau de lumière traité propagé à un système d'énergie communiquant avec les un ou plusieurs prismes de réflexion mobiles,

dans lequel les faisceaux de lumière traités effectuent à plusieurs reprises un impact les un ou plusieurs prismes de réflexion mobiles,

**caractérisé en ce que** :

le commutateur linéaire (1960) comprend en outre une série de prismes triangulaires linéaires ; et

les éléments de réflexion mobiles comprennent des prismes comprenant une surface de réflexion totale proche (NTRS), le chemin de lumière prédéterminé passant à travers une surface transparente initiale définie par au moins une portion d'une surface avant transparente de la NTRS, vers une première surface de réflexion s'étendant à un premier angle relativement à la surface transparente initiale, pour communiquer, à un deuxième angle, avec une ou plusieurs secondes surfaces de réflexion s'étendant à un troisième angle relativement à la surface transparente initiale, les une ou plusieurs NTRS étant adaptées pour effectuer la réflexion totale interne du faisceau de lumière.

2. Procédé selon la revendication 1, dans lequel :

le commutateur linéaire (1960) effectue une réflexion sensiblement totale interne dans un mode ouvert lorsque la surface plate n'est pas compressée contre la face primaire ; et,

le commutateur linéaire (1960) est transparent dans un mode fermé lorsque la surface plate est compressée contre la face primaire ; et,

l'actionnement sélectif du commutateur optique comprend le changement du commutateur optique entre des modes sélectionnés parmi le groupe constitué du mode ouvert et du mode fermé.

3. Procédé selon la revendication 1 ou 2, dans lequel l'actionnement sélectif du commutateur optique comprend la décompression de la surface plate relativement à la face primaire du prisme primaire (1101).

4. Procédé selon l'une quelconque des revendications précédentes, dans lequel l'actionnement sélectif du commutateur optique fend le faisceau de lumière traité en de multiples faisceaux de lumière traités et/ou minimise la communication des multiples faisceaux de lumière traités provenant de la chambre de confinement (830).

5. Procédé selon l'une quelconque des revendications précédentes, comprenant en outre :

l'inversement de la direction de lumière, ainsi réorientant la lumière sur elle-même et produisant un faisceau de lumière complètement traité ; et,

l'actionnement sélectif du commutateur optique pour effectuer la communication du faisceau de lumière complètement traité entre le prisme primaire (1101) et la chambre de confinement (830), ainsi produisant de multiples faisceaux de lumière complètement traités ;

le confinement et la propagation à plusieurs reprises des multiples faisceaux de lumière complètement traités dans la chambre de confinement (830) le long du chemin de lumière de réflexion prédéterminé, produisant une puissance de sortie ;

la communication de la sortie au système d'énergie.

6. Procédé selon l'une quelconque des revendications précédentes, comprenant en outre le déplacement des un ou plusieurs prismes de réflexion à une vitesse suffisamment élevée pour décaler vers le rouge les faisceaux de lumière traités, dans lequel optionnellement le décalage vers le rouge est efficace pour réduire la chaleur résiduelle.

7. Procédé selon l'une quelconque des revendications précédentes, dans lequel le système d'énergie est un ensemble à vilebrequin et la quantité d'énergie transférée au système d'énergie fait en sorte que l'ensemble à vilebrequin se déplace en va-et-vient.

8. Procédé selon l'une quelconque des revendications précédentes, comprenant en outre :

la conversion de la puissance de sortie en puissance électrique ; et,

la collecte de la puissance électrique, optionnellement en utilisant un circuit à pont H.

9. Procédé selon l'une quelconque des revendications précédentes, dans lequel le prisme primaire (1101) comprend du quartz.

10. Procédé selon l'une quelconque des revendications précédentes, comprenant en outre l'amélioration du confinement de lumière dans la chambre de confinement (830) en commutant rapidement entre la compression de la face primaire jusqu'à une distance de 0 nm par rapport à la surface plate, et, rapidement, la décompression de la face primaire jusqu'à une distance supérieure à 1000 nm par rapport à la surface plate.

11. Procédé selon l'une quelconque des revendications précédentes, dans lequel :

les un ou plusieurs prismes de réflexion ont une vitesse initiale (vo) ; et,
une plus grande quantité de travail est générée par le système d'énergie à une plus grande vitesse initiale.

12. Procédé selon l'une quelconque des revendications précédentes, dans lequel la quantité d'énergie transférée au système d'énergie génère une quantité de travail (W) calculée selon l'équation suivante :

$$W = \frac{1}{2}m\left(\left(\frac{p_0 A_m t_0}{m}\left(\frac{1-(\rho_m\tau_s)^z}{1-\rho_m\tau_s}\right)+v_0\right)^2 - v_0^2\right) \quad (1)$$

dans laquelle :

$p_0$ est une pression de rayonnement initiale sur un prisme de réflexion (1101) sur lequel les faisceaux de lumière traités effectuent un impact ;
$A_m$ est une superficie du prisme de réflexion (1101) sur lequel les faisceaux de lumière traités effectuent un impact ;
$t_0$ est une durée initiale d'impact des faisceaux de lumière traités sur le prisme de réflexion (1101) ;
$m$ est une masse du prisme de réflexion (1101) et du système d'énergie ;
$\rho_m$ est une réflectance efficace des faisceaux de lumière traités par le prisme de réflexion (1101) ;
$\tau_s$ est une transmission efficace du faisceau de lumière traité à travers le commutateur optique ;
$z$ est un nombre d'impacts répétés des faisceaux de lumière traités contre le prisme de réflexion (1101) ; et,
$v_0$ est une vitesse initiale du prisme de réflexion sur laquelle effectuent un impact les faisceaux de lumière traités.

13. Procédé selon l'une quelconque des revendications précédentes, comprenant en outre :

la collecte et la concentration de lumière en utilisant un ou plusieurs miroirs collectifs pour produire un faisceau de lumière concentré ;
l'orientation du faisceau de lumière concentré le long du chemin de lumière initial et à travers le dispositif agrandisseur/contracteur de lumière (820), ainsi produisant un faisceau de lumière concentré complètement traité ;
l'actionnement sélectif du commutateur optique, commandant la communication du faisceau de lumière concentré complètement traité entre le prisme primaire (1101) et la chambre de confinement (830), ainsi divisant le faisceau de lumière concentré complètement traité et produisant de multiples faisceaux de lumière concentrés complètement traités ;
le confinement et la propagation à plusieurs reprises des multiples faisceaux de lumière concentrés traités le long du chemin de lumière prédéterminé dans la chambre de confinement (830), produisant une puissance de sortie ;
la communication de la puissance de sortie au système d'énergie.

14. Procédé selon l'une quelconque des revendications précédentes, comprenant en outre :

l'orientation des faisceaux de lumière traités à un angle initial par rapport à la surface transparente initiale ;
la réflexion d'une première portion des faisceaux de lumière traités à partir de la surface transparente initiale pour produire une première réflexion ;
le passage d'une seconde portion des faisceaux de lumière traités à travers la surface transparente initiale, à travers une première partie du prisme NTRS à un premier angle par rapport à la première surface de réflexion, la première partie du prisme NTRS (1101) absorbant une première quantité d'énergie et produisant un premier reste des faisceaux de lumière ;

la réflexion interne totale du premier reste des faisceaux de lumière traités à un deuxième angle relativement à la première surface de réflexion à travers une deuxième partie du prisme NTRS, la deuxième partie du prisme NTRS (1101) absorbant une seconde quantité d'énergie et produisant un deuxième reste des faisceaux de lumière traités ; et

la réflexion interne totale du deuxième reste des faisceaux de lumière traités à un troisième angle relativement à la seconde surface de réflexion et à travers une troisième partie du prisme NTRS, la troisième partie du prisme NTRS absorbant une troisième quantité d'énergie et produisant un troisième reste des faisceaux de lumière traités ;

le passage du troisième reste des faisceaux de lumière traités à travers la surface transparente initiale à un angle final pour produire une seconde réflexion ;

dans lequel la combinaison de la première réflexion et de la seconde réflexion réfléchit sensiblement totalement les faisceaux de lumière traités.

**15.** Moteur à photons, comprenant un ou plusieurs cylindres, comprenant :

un prisme primaire (1101) ayant une entrée de faisceau de lumière et comprenant de multiples faces de réflexion interne totale incluant une face primaire, le prisme primaire (1101) comprenant du quartz cristallin poli ayant un indice de réfraction donné ;

un dispositif agrandisseur/contracteur de lumière (820) communiquant avec l'entrée de faisceau de lumière, le dispositif agrandisseur/contracteur de lumière (820) comprenant des facettes adaptées pour produire un faisceau de lumière traité en agrandissant le diamètre d'un faisceau de lumière entrant depuis une direction donnée ;

une chambre de confinement (830) comprenant un chemin de lumière de réflexion prédéterminé comprenant un ou plusieurs éléments de réflexion mobiles agencés pour effectuer la communication de la puissance de sortie à un système d'énergie ;

un commutateur optique comprenant un commutateur linéaire (1960) comprenant une surface plate, le commutateur linéaire (1960) étant adapté pour fournir une commande de la limite de compression entre la face primaire et la surface plate, le chemin de lumière prédéterminé comprenant en outre la surface plate du commutateur linéaire ;

**caractérisé en ce que** :

le commutateur linéaire comprend en outre une série de prismes triangulaires linéaires ; et

les un ou plusieurs éléments de réflexion mobiles comprennent des prismes comprenant une surface de réflexion totale proche (NTRS) comprenant un ou plusieurs prismes NTRS chacun comprenant une surface transparente initiale définie par au moins une portion de la surface transparente, une première surface de réflexion s'étendant à un premier angle relativement à la surface transparente initiale pour communiquer à un deuxième angle avec une ou plusieurs secondes surfaces de réflexion s'étendant à un troisième angle relativement à la surface transparente initiale, les une ou plusieurs NTRS étant adaptées pour effectuer la réflexion totale interne du faisceau de lumière.

**16.** Moteur à photons selon la revendication 15, dans lequel :

le commutateur optique est adapté pour diviser le faisceau de lumière traité de multiples fois pour produire de multiples faisceaux de lumière traités ; et/ou

un actionneur piézoélectrique est adapté pour compresser et décompresser la surface plate du commutateur linéaire (1960) relativement à la face primaire du prisme primaire (1101) ; et/ou

le moteur à photons est en outre adapté pour inverser la direction du faisceau de lumière ; et/ou

le système d'énergie est un piston et un ensemble à vilebrequin, et/ou

le système d'énergie est un dispositif à ressort ; et/ou

le moteur à photons comprend de multiples cylindres ; et/ou

les un ou plusieurs prismes de réflexion sont fonctionnellement associés à un circuit à pont H efficace pour collecter la puissance électrique.

FIG. 1

*FIG. 2*

*FIG. 5*

*FIG. 3*

*FIG. 1A*

*FIG. 1B*

406

A
y-axis
B
45°

C

+x-pol

*FIG. 4A*

406

A
y-axis
B
45°

C

+x-pol

*FIG. 4B*

FIG. 6A

FIG. 6B

700 ⟍

706

762

760

706a

714

706c

707c

707

FIG. 7A

706

762

760

AA

704d

AA

706c

FIG. 7E

706

762

760

AA

706c

FIG. 7F

*FIG. 7B*

*FIG. 7D*

FIG. 7C

FIG. 7G

FIG. 7H

800

collector                                              multiplier

solar
input

AA

converter                                              generator

AA

electric
output

*FIG. 8*

FIG. 9

FIG. 10

**FIG. 11**

Total P-Polarized Transmission, $T_p^{tot}$ vs Gap distance, d

FIG. 12A

Total S-Polarized Transmission, $T_s^{tot}$ vs Gap distance, d

FIG. 12B

*FIG. 13A*

*FIG. 13B*

*FIG. 14A*

Temporal ray-tracing continuum diagram

FIG. 15

Temporal ray-tracing Flat land diagram

$t_0$ to $t_1$ – rays have randomly sampled time over range

$t_1$ to $t_2$ – reflective optical switch

$t_2$ to $t_3$ – transparent optical switch

$t_3$ – reflective optical switch

time > $t_3$ – uncontained light left in model.1

time > $t_3$ – contained light in enclosure containment.1

*FIG. 16*

FIG. 17

*FIG. 18*

*FIG. 19*

*FIG. 20 A*

1960

Total Internal Reflection (TIR)

*FIG. 20B*

1960

1960a

*FIG. 20C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004256539 A
- US 836774
- US 2004008495 W